Europäisches Patentamt

**European Patent Office**

Office européen des brevets

(19)

(11) **EP 1 162 058 A1**

(12) **EUROPEAN PATENT APPLICATION**
published in accordance with Art. 158(3) EPC

(43) Date of publication:
**12.12.2001 Bulletin 2001/50**

(51) Int Cl.⁷: **B32B 5/28**, B29C 70/44, B29C 70/48

(21) Application number: **00902986.9**

(22) Date of filing: **15.02.2000**

(86) International application number:
**PCT/JP00/00838**

(87) International publication number:
**WO 00/48830 (24.08.2000 Gazette 2000/34)**

(84) Designated Contracting States:
**AT BE CH CY DE DK ES FI FR GB GR IE IT LI LU MC NL PT SE**

(30) Priority: **16.02.1999 JP 3739199**
**17.02.1999 JP 3875599**
**16.03.1999 JP 7029699**

(71) Applicant: **TORAY INDUSTRIES, INC.**
**Tokyo 103-8666 (JP)**

(72) Inventors:
• **SEKIDO, Toshihide**
**Otsu-shi, Shiga 520-0046 (JP)**
• **KIMOTO, Yukitane**
**Matsuyama-shi, Ehime 791-0121 (JP)**
• **KONDO, Toshiyuki**
**Iyo-gun, Ehime 791-3120 (JP)**

(74) Representative: **Coleiro, Raymond et al**
**MEWBURN ELLIS**
**York House**
**23 Kingsway**
**London WC2B 6HP (GB)**

(54) **FRP STRUCTURE BODY AND PRODUCTION METHOD THEREFOR**

(57) An FRP structural material having a plurality of sheets of a core material stacked in a thickness direction and an FRP skin layer disposed on at least one surface of the stacked core materials; an FRP structural material comprising a pair of spaced-apart plates, at least one plate containing FRP, and a seamless, enclosed hollow core material contained in the space; production methods for these FRP structural materials; and a method of repairing an FRP structural material, wherein, when a portion not impregnated with a resin is found on the surface of the material, the non-impregnated portion is entirely covered with a bag substrate, the inside covered with the bag substrate is evacuated and a resin is injected into the inside for impregnating into the non-impregnated portion of a reinforcing fiber substrate. A multiple-layer core structure allows an easy formation of a comparatively large FRP structural material having a curved surface. An FRP structural material containing a seamless, enclosed hollow core material has a lightweight and high-strength features and can be easily formed by a vacuum RTM process. The above repairing method permits an easy, low-cost repairing without sacrifice in strength to thereby reduce the production costs of an FRP structural material.

FIG. I

EP 1 162 058 A1

**Description**

Technical Field of the Invention

The present invention relates to an FRP structural material and a process for manufacturing the same, and specifically, relates to an FRP structural material with a lightweight and high strength property suitable as an FRP sandwich structural material, and a process for manufacturing an FRP structural material that can manufacture the FRP structural material efficiently and inexpensively.

Background Art of the Invention

A great deal of attention is paid to an FRP (fiber reinforced plastic) as a lightweight and high-strength material in various industrial fields. Among various FRPs, CFRP (carbon fiber reinforced plastic) is particularly noticed from the viewpoint of its excellent mechanical property, etc.

In such FRP structural materials, a structure comprising a lightweight core material and an FRP skin layer is often employed in order to achieve high strength and stiffness keeping a lightweight property. Although an FRP skin layer is disposed on at least one surface of a core material, usually a sandwich structure in that an FRP skin layer is disposed on each surface of a core material is often employed. Further, as a core material, a lightweight core material formed from, for example, a foamed material (a foam core) is often employed to maintain the lightweight property of the whole of a structural material. The core material formed from a foamed material is excellent not only in lightweight property but also in heat insulation property, etc. When an FRP structural material is formed by using such a core material, molding can be performed easily and efficiently because the core material itself may be used as a support material, a reinforcing fiber substrate may be disposed on it, and a resin may be impregnated the reinforcing fiber substrate and cured.

The core material described above is so far formed as a single-layer core material, and an FRP skin layer is disposed on one surface or each surface of the core material to make an FRP structural material formed integrally as a whole. As such a single-layer core material, for example, in case of a foamed material, usually a material having a thickness more than 20 mm is used to ensure the properties such as stiffness of the whole of the structural material.

However, in such a relatively thick core material, when the core material itself is formed, it is difficult to form a small-curvature portion by bending an original core material formed in a flat shape. Therefore, in a case where a curved surface portion with a relatively small radius of curvature is required to a final form of an FRP structural material, at least it becomes difficult to use a core material for the portion, or it becomes necessary to mold the FRP structural material in a desired shape by foaming and using an expensive mold, or to process a core material into a desired shape at an extremely high processing cost. Therefore, in practice, in a process for forming an FRP structural material using a core material, there is a certain limit in shape to be formed, particularly, in shape of a curved surface portion.

Further, with respect to an FRP sandwich structural material, it is used in various fields, particularly, such as uses for construction/building materials and for molding an FRP sandwich structural material, usually a foamed material is used as a core material. Although usually organic foamed materials such as an urethane foam, a polystyrene foam and a phenol foam are employed as a core material, because it is necessary to use a raw material mixed with a foaming agent in a polymer for manufacturing these foamed materials, a high cost is required for the manufacture, and this causes an increase of cost for manufacturing an FRP sandwich structural material.

Particularly, in order to use a vacuum RTM (Resin Transfer Molding) recently paid attention to as a molding method capable of manufacturing an FRP with a high strength at a low cost, it is necessary that a core material bears a vacuum pressure, and a density of a core material must be high to achieve a high compression strength for bearing the vacuum pressure, and therefore, a foaming material with not only higher cost but also heavier weight, as compared with a usual foamed material, has been used. As a result, in an FRP sandwich structural material using such a core material, the cost for the manufacture has increased because of the high cost of the core material even if a low-cost process has been employed as the molding method.

Further, even when an FRP is molded into a relatively large member, a structural material combined with FRP skin material and a lightweight core material, especially a sandwich structural material in which an FRP skin layer is disposed on each surface of a core material, is often employed. By such a constitution, an FRP structural material with a lightweight in spite of a large size, and having a necessary strength and stiffness, can be obtained. In order to further reinforce the FRP structural material, it is also known that it is effective to dispose a reinforcing member such as rib or a cap at an appropriate position.

However, because in most cases a relatively large FRP structural material has been manufactured by hand lay-up method, the manufacture is not so easy, and the cost therefor is relatively high. Against these problems, it is still hard to say that a molding technology capable of manufacturing a relatively large FRP structural material easily and at low cost is established.

Further, as a method capable of molding a relatively large FRP structural material efficiently, a method is known wherein a reinforcing fiber substrate is disposed on at least one surface of a core material with grooves, after the whole of the material is covered with a bag substrate, the inside covered with the bag substrate is evacuated, and then a resin is injected and the resin is impregnated in the thickness direction of the reinforcing fiber material while being distributed in the surface direction of the reinforcing fiber material through the grooves of the core material, and the core material and the reinforcing fiber material are molded integrally by the resin (for example, U.S. Pat. No. 5,721,034).

In such a molding method, grooves for forming resin paths when molded are defined on a core material, for example, on a core material formed from a foamed material. These grooves are defined to form a predetermined pattern by mechanical processing or the like after the core material is molded (or prepared) in a predetermined shape such as a rectangle or the like.

However, in the above-described method for post-processing grooves after forming a core material, it takes labor and cost for the post-processing, and in a case of a large number of core materials, the time and the cost required for processing the core material become too great, ultimately, the cost for the manufacture of the FRP structural material increases.

Further, when a groove of a core material is post-processed by a mechanical processing, because the ability of the processing machine is limited, a pattern of a groove to be formed is also limited. Therefore, sometimes there occurs a case where a groove with a complicated pattern or an arbitrary free pattern cannot be formed, and therefore, sometimes an optimum resin path pattern for molding an FRP structural material cannot be obtained. This groove pattern of a core material is an important factor for molding a uniform FRP structural material efficiently, and optimization of a groove pattern gives a high possibility to mold an FRP structural material with more excellent properties at a high efficiency.

Furthermore, although it is desired that, when a relatively large FRP structural material is molded by the above-described method, a resin is impregnated uniformly and quickly on the thickness direction of a reinforcing fiber substrate while being distributed uniformly in the surface direction of the reinforcing fiber substrate in order to mold a uniform FRP structural material efficiently, it is hard to say that a molding technology to satisfy such a requirement is established.

Further, when an FRP structural material is molded by the above-described method or by a hand lay-up method, especially, when a relatively large FRP structural material is molded, a portion not impregnated with resin, namely, a portion of a reinforcing fiber substrate that is poor in resin impregnation, sometimes appears on the surface. In the conventional technology, when such a resin non-impregnated portion is generated, for example, a method for impregnating a resin from the surface of an outer layer by hand lay-up method is employed. When a resin non-impregnated portion is deep, a method for removing the resin non-impregnated portion and repairing the portion by depositing a resin already impregnated substrate such as a prepreg into the portion may be also employed.

However, in such a method for repairing due to hand lay-up, because air is not bled out from the portion to be repaired, it is difficult to completely impregnate a resin into the portion. Therefore, there is a fear that a resin non-impregnated portion (void) remains, and the mechanical property of the portion decreases. Further, in the method for depositing a resin already impregnated substrate such as a prepreg, it takes time for the working because of its poor workability, as well as the strength may locally decrease because a repaired portion is composed of another material, thereby making the portion discontinuous. Furthermore, there is a fear that a reinforcing fiber material around the portion is cut when the resin non-impregnated portion is removed, and also from this respect the strength may be decreased.

Disclosure of the Invention

It is an object of the present invention to provide an FRP structural material and a process for manufacturing the same, which can easily mold a curved surface with a relatively small radius of curvature and can mold an FRP structural material in a substantially arbitrary shape while ensuring enough strength and stiffness required for the FRP structural material by use of a core material.

It is another object of the present invention to manufacture a lightweight FRP sandwich structural material with sufficiently high mechanical properties at a low cost, and especially to provide an FRP sandwich structural material suitable for a building material such as a roof material and the like, and a process method for manufacturing the same.

It is a further object of the present invention to establish a molding technology capable of manufacturing a relatively large FRP structural material easily and inexpensively.

It is a further object of the present invention to be able to mold an FRP structural material by a vacuum RTM method more efficiently and inexpensively by previously forming a groove of a core material.

It is a further object of the present invention to establish a molding technology capable of impregnating a resin uniformly and quickly in the thickness direction of a reinforcing fiber substrate while distributing the resin uniformly in the surface direction of the reinforcing fiber substrate even in case of a relatively large FRP structural material, thereby manufacturing a uniform FRP structural material efficiently and inexpensively.

It is a still further object of the present invention to provide a process for manufacturing an FRP structural material capable of repairing the material rationally, by preventing occurrence of a void or a local resin non-impregnated portion by impregnating a resin substantially completely with an extremely simple repair working, and by preventing decrease of the strength by performing the repair without cutting of a reinforcing fiber substrate and by forming the same FRP structure as that a structure of the portion around the repaired portion.

To accomplish the above objects, an FRP structural material according to the present invention comprises an FRP structural material having a core material and an FRP skin layer disposed on at least one surface of the core material, characterized in that a plurality of core materials are stacked in the thickness direction.

This FRP structural material may have a portion where core materials are directly stacked onto each other, namely the respective core materials are stacked so as to contact directly with each other, or may have portion where an FRP skin layer is interposed between the stacked core materials. The present invention is especially effective in a case where a stacked body of the core materials has a curved surface on at least one part of the body. Although a material of the core material is not particularly restricted, a foamed material, especially a material having an independent foamed porous mechanism is preferable from the viewpoint of increasing strength and stiffness while maintaining a lightweight property of the whole of the structural material.

The thickness of one core material is preferably 20 mm or less. By using such a relatively thin core material, as its single material, a freely curved surface can be easily formed. Even though a core material itself is thin, by stacking a plurality of the core materials, the thickness of the stacked body of the core materials can be easily set at the same level or more as usual. Since a plurality of thin core materials each formed in a designed shape are stacked, the stacked body is formed as a designed shape with no problems. Therefore, even in a case of a shape having a curved surface with a relatively small radius of curvature, it may be easily formed, and therefore, the shape of an FRP structural material to be formed may not be substantially limited.

In such a core material, a groove for distributing a resin at the time of forming an FRP skin layer may be formed on a surface of at least one core material. The groove for resin distribution, for example, may comprise a large groove and a small groove communicated with the large groove. Further, an FRP rib, which extends in the thickness direction of the core material and which is combined integrally with the FRP skin layer, may be provided. Furthermore, a structure may be employed wherein a net-like material is disposed at a position adjacent to a reinforcing fiber substrate of an FRP skin layer, and the FRP skin layer, the net-like material and at least one sheet of a core material are integrally molded.

A process for manufacturing an FRP structural material according to the present invention is characterized in that a plurality of core materials are stacked, a reinforcing fiber substrate is disposed on at least one surface of the core material, and the reinforcing fiber substrate is impregnated with a resin.

In this manufacturing process, a reinforcing fiber substrate may be interposed into at least a part of a portion between the stacked core materials. A method may be employed wherein a groove is defined on a surface of a core material in contact with a reinforcing fiber substrate, and a resin is distributed along the groove as well as the resin is impregnated into the reinforcing fiber substrate. Further, a method may be employed wherein a net-like material is disposed between a core material and a reinforcing fiber substrate, and a resin is distributed along the net-like material as well as the resin is impregnated into the reinforcing fiber substrate.

Further, a method may be employed wherein, after at least a portion disposed with a reinforcing fiber substrate is covered with a bag substrate, the inside covered with the bag substrate is evacuated, and a resin is injected to impregnate the resin into the reinforcing fiber substrate. Furthermore, a method may be employed wherein a reinforcing fiber substrate extending in the thickness direction of the core material is disposed, and an FRP rib is formed by impregnating a resin into the reinforcing fiber substrate.

In such an FRP structural material and the process for manufacturing the same, as the core material of an FRP structural material is composed of a stacked body of thin core materials, a substantially freely curved surface can be formed while the lightweight, strength and stiffness as the whole of the FRP structural material can be ensured, and an FRP structural material having a curved surface portion with a relatively small radius of curvature also can be easily manufactured.

Further, the present invention provides an FRP structural material wherein a pair of plates, at least one of which contains FRP, are disposed with a gap therebetween, and a rib structural material connecting both plates is interposed in the gap, characterized in that a seamless, enclosed hollow core material is contained in the gap. It is necessary to use a seamless, enclosed hollow core material as a hollow core material. If using a core material with seam, when molding by particularly an RTM method, the seam portion (a seam portion due to bonding such as adhesion) is broken by a resin pressure, and because a trouble is liable to occur wherein a resin enters into the inside of a core material, it is necessary to use a seamless, enclosed hollow core material.

An FRP, metal and wood and the like can be used as a raw material of the rib structural material, and it is preferable that the rib structural material is disposed and inserted at the same time as molding a pair of plates. The dimension of the gap between a pair of plates may be substantially constant or varied in the extending direction of the plates. The shape of a plate itself may be merely a flat plate shape, but for example, at least one plate may be formed as a folded plate in which a mountain part and a valley part are disposed alternately. The mountain and/or valley part may be extended at a straight line in a certain direction, and may be formed into a three-dimensional shape such as a pyramid shape. For the rib structural material, various kinds of cross section can be employed, and further, a truss or rahmen structural material can be also employed.

A seamless, enclosed hollow core material can be formed from, for example, a thermoplastic resin, and for example, can be form from blow forming product made of a thermoplastic resin. As the volume of the seamless, enclosed hollow core material, 1000 cm$^3$ or more is preferable, and by this a relatively large FRP structural material can be easily formed. A reinforcing fiber substrate is wound on the seamless, enclosed hollow core material made of such a thermoplastic resin, and a substantially FRP box-like body may be formed after an FRP sandwich structural material is molded. If a groove is formed on any one surface of a seamless, enclosed hollow core material with a polyhedron structure, a resin can be distributed at the time of molding. Further, a structure may be employed wherein a net-like material is disposed at a position adjacent to a reinforcing fiber substrate of FRP of at least one plate, and the at least one plate, the net-like material and at least the seamless, enclosed hollow core material are integrally molded, and even in such a structure, a resin can be distributed at the time of molding. As to the shape of a seamless, enclosed hollow core material, in addition to a rectangular parallelepiped, a triangle, a trapezoid, and other polygonal shapes can be used.

A thickness of a seamless, enclosed hollow core material is preferably in the range of 0.5 mm to 5 mm. If the thickness is less than 0.5 mm, the core material is likely to be broken or deformed when evacuated in a RTM process. If the thickness is more than 5 mm, the lightweight property may be damaged as well as the cost increases due to increase of volume of the raw material.

In this FRP sandwich structural material, it is preferred that carbon fibers are contained as a reinforcing fiber of FRP of at least one plate. By containing carbon fibers, the strength and stiffness as a whole of an FRP structural material can be increased. Especially, it can serve cost saving to use a reinforced fiber containing a tow-like carbon fiber filamentary yarn number of filament of which is in the range of 10,000 to 300,000.

Further, in this FRP sandwich structural material, it is preferred that the matrix resin of at least one plate comprises a phenol resin in order to increase its fireproof property. Furthermore, a layer comprising a fireproof material, for example, a material having a fireproof property or a fireproof paint can be provided on at least one surface.

Further, this FRP sandwich structural material can be preferably used as a building material such as a roof material and the like. In this case, the whole of an FRP roof material or the whole of one unit of an FRP roof material can be formed in a three dimensional shape. For example, a structure that at least one plate has a part of polyhedron-like three-dimensional shape, or a structure that at least one plate has a three-dimensional curved surface portion, can be employed. And a structure with both of these three-dimensional shapes can be also employed.

A process for manufacturing an FRP structural material according the present invention is characterized in that reinforcing fibers are disposed on a mold, a seamless, enclosed hollow core material wound with reinforcing fibers at a predetermined position is disposed on the reinforcing fibers disposed on the mold, reinforcing fibers are further disposed thereon, and after the whole of the materials is covered with a film substrate for vacuum, the inside covered with the film substrate is evacuated, and a resin is injected to impregnate the resin into reinforcing fibers. The seamless, enclosed hollow core material can be formed, for example, by blow molding.

In the above-described FRP structural material and process for manufacturing the same, because a seamless, enclosed hollow core material is contained in a gap between both plates, this seamless, enclosed hollow core material also can function as a core and/or a rib of a sandwich panel structure, and while the mechanical properties of the whole of the FRP sandwich structural material can be ensured to be sufficiently high, the lightweight property of the whole can be maintained because of the hollow structure, or the property can be increased as compared with that of other rib structures. Moreover, since the seamless, enclosed hollow core material may be merely in a formation of a molded resin product before molding the whole of an FRP sandwich structural material, it can be manufactured at a low cost.

Further, an FRP structural material according to the present invention comprises a core material, an FRP plate disposed on at least one surface of the core material and an FRP reinforcing material disposed at least on one end portion of the core material and having a flange portion extending substantially in parallel to and a web portion extending substantially perpendicular to the FRP plate, and the FRP structural material is characterized in that a recessed portion, into which the flange portion of the reinforcing material is fitted, is defined on at least one surface of the one end portion of the core material, a groove communicating with the recessed portion and forming a resin path at the time of molding is defined on the core material, and the FRP plate, the FRP reinforcing material and the core material are integrally molded with a resin.

In the above-described FRP structural material, although an FRP plate may be disposed only on one surface of the core material, preferably a structure is employed wherein the FRP structural material has a sandwich structure in which the FRP plate is disposed on each surface of the core material, and the reinforcing material extends between two FRP plates. By such a sandwich structure, the lightweight property of the whole of the FRP structural material can be ensured, while the strength, stiffness and surface durability can be ensured by the FRP plates disposed on both surfaces, and besides, higher strength and stiffness of the whole of the FRP structural material can be achieved by the reinforcing material.

Although the above-described recessed portion also may be provided on only one surface of one end portion of a core material, it is preferably provided on each surface of a core material. The above-described groove, for example, can be formed as a shape comprising a large groove and a small groove diverged from the large groove.

Such a groove shape formed from a large groove and a small groove can be optimized to improve the properties such as resin distribution. For example, when H is referred to as a depth of a large groove, W is referred to as a groove width and P is referred to as a pitch of the groove, it is preferred to satisfy the following relationship.

$$\text{(a) } 200 \geqq W \times H \geqq 5 \ (\text{mm}^2),$$

$$\text{(b) } 300 \geqq P \geqq 100 \ (\text{mm})$$

Or when h is referred to as a depth of a small groove, w is referred to as a groove width and p is referred to as a pitch of the groove, it is preferred to satisfy the following relationship.

$$\text{(a) } 100 \geqq w \times h \geqq 1 \ (\text{mm}^2),$$

$$\text{(b) } 100 \geqq p \geqq 5 \ (\text{mm})$$

Further, the above-described reinforcing material either can be disposed continuously in the surface direction of the FRP plate, or can be disposed discontinuously. Even if discontinuously disposed, a sufficient reinforcement effect can be obtained by selecting an adequate reinforcing material and a proper pitch.

Further, it is preferred that a share strength between the flange portion of the above-described reinforcing material and the FRP plate is not less than a tensile strength of the flange portion of the reinforcing material itself determined in the share direction thereof. Particularly, a length of the flange portion of the reinforcing material "a" preferably satisfies the following equation.

$$\max (\sigma_2 \times t_2, \sigma s \times ts) \geqq K \tau a$$

$$\geqq \min (\sigma_2 \times t_2, \sigma s \times ts)$$

Where, $\sigma_2$ is a tensile strength of the flange portion,
$t_2$ is a thickness of the flange portion,
$\sigma s$ is a tensile strength of the FRP plate,
ts is a thickness of the FRP plate,
$\tau$ is a share strength between the flange portion and the FRP plate,
K is a valid efficiency of connection,
"max" shows the greatest value in the parenthesis, and
"min" shows the smallest value in the parenthesis.

Further, it is preferred that a value of the product by the tensile strength $\sigma_2$ and the thickness $t_2$ of the flange portion of the reinforcing material is not more than a value of the product by the tensile strength $\sigma s$ and the thickness ts of the FRP plate, and the length "a" of the flange portion satisfies the following equation.

$$\sigma s \times ts / \tau \geqq K a \geqq \sigma_2 \times t_2 / \tau$$

Further, it is preferred that a length of the flange portion "a" and a length of the web portion "b" of the reinforcing material satisfy the following equation.

$$a / a_0 = K (b / b_0) [(t_2 / t_{20}) / (t_1 / t_{10})]^2$$

Where,

$t_1$ is a thickness of the web portion,
$t_2$ is a thickness of the flange portion,
the attached character 0 is a standard value set up depending on a molding condition, and
K is a proportional constant.

Furthermore, it is preferred that a length of the flange portion "a" and a length of the web portion "b" of the reinforcing material satisfy the following equation.

$$a / a_0 = K (b / b_0) (ts / t_1 + 1)^2$$

Where,

$t_1$ is a thickness of the web portion or the flange portion,
ts is a thickness of the FRP plate,
$a_0$ and $b_0$ are standard values set up depending on a molding condition, and
K is a proportional constant.

A process for manufacturing an FRP structural material according to the present invention is characterized in that a core material having a recessed portion defined on at least one surface of one end portion, a reinforcing fiber substrate extending in the surface direction of the core material on at least one surface of the core material, and a substrate for forming a reinforcing material having a flange portion substantially extending in parallel to the reinforcing fiber substrate and positioned in the recessed portion and a web portion substantially extending perpendicular to the reinforcing fiber substrate, are disposed in a mold, a medium for distributing a resin in its surface direction is disposed above, or above and below these disposed materials and substrate, or a resin distribution path for distributing a resin in the surface direction of the core material is defined on the core material, and then, after the whole is covered with a bag film, the inside covered with the bag film is evacuated, a resin is injected and distributed along the surface of the reinforcing fiber substrate and the resin is impregnated into the reinforcing fiber substrate, thereby the reinforcing fiber substrate, the substrate for forming a reinforcing material and the core material are integrally molded by the resin.
In this process for manufacturing an FRP structural material, the substrate for forming a reinforcing material also may comprise a reinforcing fiber substrate, or, the substrate for forming a reinforcing material may comprise a preformed FRP substrate.
Further, a reinforcing fiber substrate is disposed on each surface of the core material, and the substrate for forming a reinforcing material may be disposed so as to extend between both reinforcing fiber substrates. Furthermore, it can be employed that a resin distribution path of the core material is communicated with the recessed portion, and the substrate for forming a reinforcing material is integrally molded by introducing the injected resin into the recessed portion.
Further, an FRP structural material according to the present invention is characterized in that an FRP layer is disposed on at least one surface of a core material comprising from a foaming material, the core material being molded by foaming in a mold with a pattern for defining a predetermined groove and the core material having a groove defined at the same time as molding on at least one surface of the core material. Namely, a core material with a groove is previously molded by using a foaming material and a mold with a pattern to form a predetermined desired groove.
In this FRP structural material, it is preferred that reinforcing fibers of the FRP layer include a tow-like carbon fiber filamentary yarn of which filament number is in the range from 10,000 to 300,000. By this, a desired FRP structural material can be mold at a low cost and efficiently even in a case of a relatively large FRP structural material.
Further, a structure may be employed wherein a core material, a net-like material disposed on a surface of the core material, and a layer containing a reinforcing fiber substrate disposed on the net-like material are disposed in this order, and these materials are molded integrally. By disposition of the net-like material, a resin can be distributed uniformly and quickly. The layer containing the reinforcing fiber substrate may comprise an FRP layer, or may comprise a fiber reinforcing inorganic material layer. Because the net-like material is integrally formed, its thickness is preferably 3 mm or less.
It is preferred that a groove is defined on the above-described core material for forming a resin path at the time of molding. Further, it is preferred that reinforcing fibers of the above-described reinforcing fiber substrate include a tow-like carbon fiber filamentary yarn of which filament number is in the range of 10,000 to 300,000. The core material may be formed, for example, as a hollow material, or as a seamless, enclosed hollow core material as aforementioned. Further, the core material can be formed from a plastic, a rubber or a thin metal. As the cross section, a circular or rectangular cross section can be employed. In a case of a hollow core material, a foaming material can be filled up in the core material.

Further, a process for manufacturing an FRP structural material according to the present invention is characterized in that a core material with a groove is molded by foaming a foaming material in a mold with a pattern for forming a predetermined groove, a reinforcing fiber substrate is disposed on at least one surface of the molded core material with a groove, and after the whole is covered with a bag substrate, the inside covered with the bag substrate is evacuated, and a resin is injected and distributed along the surface of the reinforcing fiber substrate via the groove of the core material while the resin is impregnated into the reinforcing fiber substrate in the thickness direction of the reinforcing fiber substrate, thereby the core material and the reinforcing fiber substrate are integrally molded by the resin.

Further, a process for manufacturing an FRP structural material according to the present invention is characterized in that a core material, a net-like material disposed on at least one surface of the core material, and a reinforcing fiber substrate provided on the net-like material are disposed in this order, and after the whole is covered with a bag film, the inside covered with the bag film is evacuated, and a resin is injected and distributed along the surface of the reinforcing fiber substrate via the net-like material, the distributed resin is impregnated into the reinforcing fiber substrate, thereby the core material, the net-like material and the reinforcing fiber substrate are integrally molded by the resin.

In the process for manufacturing an FRP structural material, a groove for a resin path may be defined on the core material, and an injected resin through the groove can be distributed to each part of the net-like material. Further, a hollow core material is used as the core material. Furthermore, the reinforcing fiber substrate may be disposed over the entire circumference of the core material.

Further, a process for manufacturing an FRP structural material according to the present invention is characterized in that, in a process for manufacturing an FRP structural material formed from an FRP composed of a reinforcing fiber substrate and a matrix resin, when a portion not impregnated with a resin is found on a surface, after the whole of the resin non-impregnated portion and its vicinity is entirely covered with a bag substrate, the inside covered with the bag substrate is evacuated, and a resin is injected into the inside to impregnate the resin into the resin non-impregnated portion of the reinforcing fiber substrate. By this process, the resin non-impregnated portion can be repaired efficiently and inexpensively.

In this process, the whole of the resin non-impregnated portion can be covered with the bag substrate after a resin distribution medium is disposed on the resin non-impregnated portion. Further, a resin permeable mold separation material may be interposed between the resin distribution medium and the reinforcing fiber substrate with the resin non-impregnated portion.

Brief explanation of the drawings

Figure 1 is a partial perspective view of an FRP structural material according to an embodiment of the present invention.

Figure 2 is a partial perspective view of an FRP structural material according to another embodiment of the present invention.

Figure 3 is a partial perspective view of an FRP structural material according to a further embodiment of the present invention.

Figure 4 is a partial perspective view of an FRP structural material according to a further embodiment of the present invention.

Figure 5 is a partial perspective view of a sheet of a core material.

Figure 6 is a partial perspective view showing a process for manufacturing an FRP structural material according to an embodiment of the present invention.

Figure 7 is a perspective view showing an example of a core material.

Figure 8 is a perspective view showing another example of a core material.

Figure 9 is a sectional view of an FRP structural material according to a further embodiment of the present invention.

Figure 10 is a partial sectional view of an FRP structural material according to a further embodiment of the present invention.

Figure 11 is a sectional view of an FRP structural material according to a further embodiment of the present invention.

Figure 12 is a perspective view showing a further example of a core material.

Figure 13 is a partial sectional view of an FRP structural material according to a further embodiment of the present invention.

Figure 14 is a partial sectional view of an FRP structural material according to a further embodiment of the present invention.

Figure 15 is a perspective view of an FRP structural material according to a further embodiment of the present invention.

Figure 16 is a perspective view of an FRP structural material according to a further embodiment of the present invention.

Figure 17 is a sectional view of an FRP structural material according to a further embodiment of the present invention.

Figure 18 is a partial perspective view showing an example of a method for processing an end portion of a core material.

Figure 19 is a sectional view showing a process for manufacturing an FRP structural material according to another embodiment of the present invention.

Figure 20 is a perspective view showing a further example of a core material.

Figure 21 is a partial perspective view showing each example of formed grooves of a core material.

Figure 22 is a partial sectional view showing each example of structures of an end portion of a core material.

Figure 23 is a partial sectional view showing an example of a disposition and a shape of a groove of a core material.

Figure 24 is a partial sectional view of an FRP structural material according to a further embodiment of the present invention.

Figure 25 is a partial sectional view showing each of other structural examples of the present invention.

Figure 26 is a partial perspective view showing an example of a structure of an end portion of a core material.

Figure 27 is a partial sectional view of an FRP structural material according to a further embodiment of the present invention.

Figure 28 is a partial sectional view of an FRP structural material according to a further embodiment of the present invention.

Figure 29 is a partial perspective view of an FRP structural material according to a further embodiment of the present invention.

Figure 30 is a partial sectional view of an FRP structural material according to a further embodiment of the present invention.

Figure 31 is a partial plan view of an FRP structural material according to a further embodiment of the present invention.

Figure 32 is a partial sectional view of an FRP structural material according to a further embodiment of the present invention.

Figure 33 is a partial sectional view of an FRP structural material according to a further embodiment of the present invention.

Figure 34 is a partial sectional view of an FRP structural material according to a further embodiment of the present invention.

Figure 35 is a partial sectional view of an FRP structural material according to a further embodiment of the present invention.

Figure 36 is a plan view showing each of examples of a groove pattern of a core material.

Figure 37 is a sectional view of an FRP structural material according to a further embodiment of the present invention.

Figure 38 is a sectional view showing a process for manufacturing an FRP structural material depicted in Figure 37.

Figure 39 is a perspective view of an FRP structural material depicted in Figure 37.

Figure 40 is a sectional view showing a process for manufacturing an FRP structural material according to a further embodiment of the present invention.

Figure 41 is a perspective view of a core material of an FRP structural material depicted in Figure 40.

Figure 42 is a perspective view showing a process for manufacturing an FRP structural material according to a further embodiment of the present invention.


The Best mode for carrying out the Invention

Hereinafter, desirable embodiments of the present invention will be explained referring to figures.

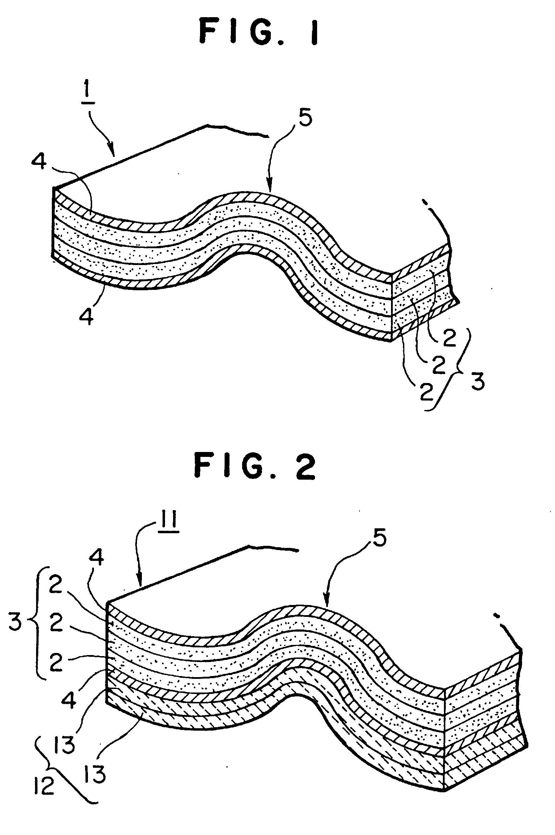

Figure 1 shows an FRP structural material according to an embodiment of the present invention. In this embodiment, a stacked body 3 is formed from core materials 2 by directly stacking three sheets of core materials 2 each formed from a thin foamed material the thickness of one sheet of which is 20 mm or less, and an FRP structural material 1 having a sandwich structure is formed by disposing an FRP skin layer 4 on each surface of this stacked body 3 of core materials.

Each core material 2 has a curved surface portion 5 whose radius of curvature is relatively small, and the stacked body 3 and further the FRP structural material 1 have also this curved surface portion. Namely, although a portion having such a small radius of curvature has been difficult to be formed by a conventional processing of bending a flat raw material for a core material, it can be easily performed with no problems to form a single core material 2 by thinning each core material 2, and further by stacking a plurality of the core materials 2, a stacked body 3, ultimately, an FRP structural material 1 having a portion of a relatively small radius of curvature, can be easily formed with no problems.

Moreover, as stacked body 3 of core materials is composed of the core materials 2 by stacking an adequate number of sheets, a target thickness can be easily set as that of the core material for the whole of FRP structural material 1. As FRP skin layer 4 is disposed on each surface of stacked body 3 of core materials having a predetermined thickness and an FRP structural material 1 of a sandwich structure integrally molded as a whole is formed, as the obtained FRP structural material 1, a desired lightweight property is ensured as well as target strength and stiffness can be easily obtained, and properties such as heat insurance also can be achieved.

Figure 2 shows an FRP structural material 11 according another embodiment. In this embodiment, a fireproof layer 12 is further added to FRP structural material 1 depicted in Figure 1. And this fireproof layer 12 is also composed of a stacked body of a plurality of layers each single layer 13 (for example, composed of an inorganic wool material) having a relatively small thickness. Therefore, this fireproof layer 12 also can be formed into a freely curved surface similarly to in the above-described core material.

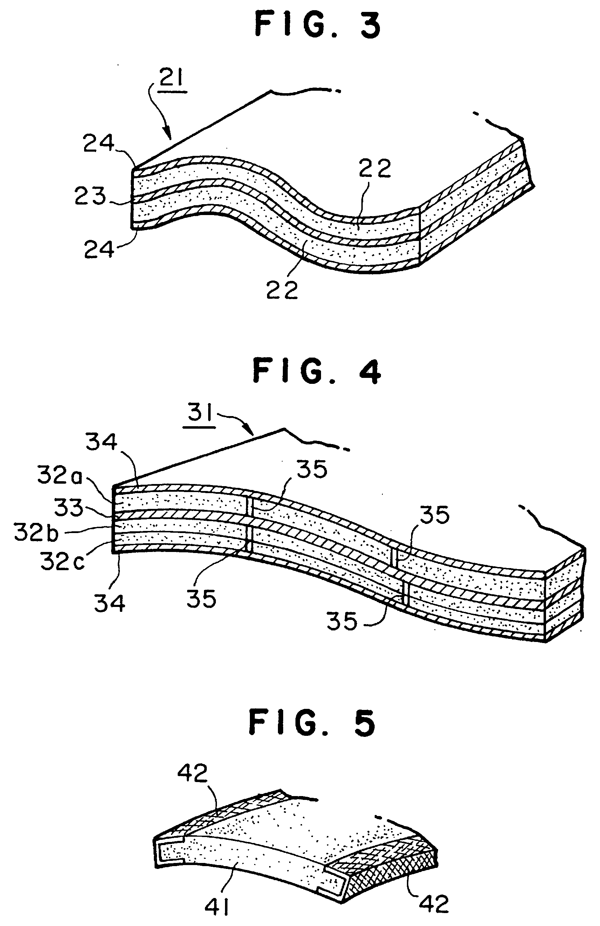

Figure 3 shows an FRP structural material 21 according to a further embodiment of the present invention. In this embodiment, an FRP structural material 21 has two sheets of relatively thin core materials 22, an FRP skin layer 23 is interposed between both core materials 22 and an FRP skin layer 24 is disposed on each surface of FRP structural material 21.

Thus, in the present invention, a part in that thin core materials 2 are directly stacked may be provided as shown in Figure 1, or a part in that an FRP skin layer 23 is interposed between core materials 22 may be provided as shown in Figure 3. Further, as shown in Figure 4 described later, a structure with both of these parts may be employed.

Figure 4 shows an FRP structural material 31 according to a further embodiment of the present invention. In this embodiment, three sheets of core materials 32a, 32b, 32c are stacked, and an FRP skin layer 33 is interposed between core material 32a and core material 32b, and further an FRP skin layer 34 is disposed on each surface of FRP structural material 31. FRP ribs 35 each extending in the thickness direction of the respective core materials are provided at appropriate positions. Each FRP rib 35 is combined integrally with FRP skin layers positioned on both sides, thereby increasing the strength and stiffness of the whole of FRP structural material 31.

Such an FRP rib 35 is formed by a method, for example, shown in Figure 5. As shown in Figure 5, a reinforcing fiber substrate 42 for forming a rib with U-shaped cross section is disposed on each end portion of a single core material 41, and after the core material 41 equipped with these reinforcing fiber substrates 42 is disposed and stacked in a predetermined formation, FRP rib 35 is molded by impregnating a resin into the portions of the reinforcing fiber substrates 42 and curing the resin.

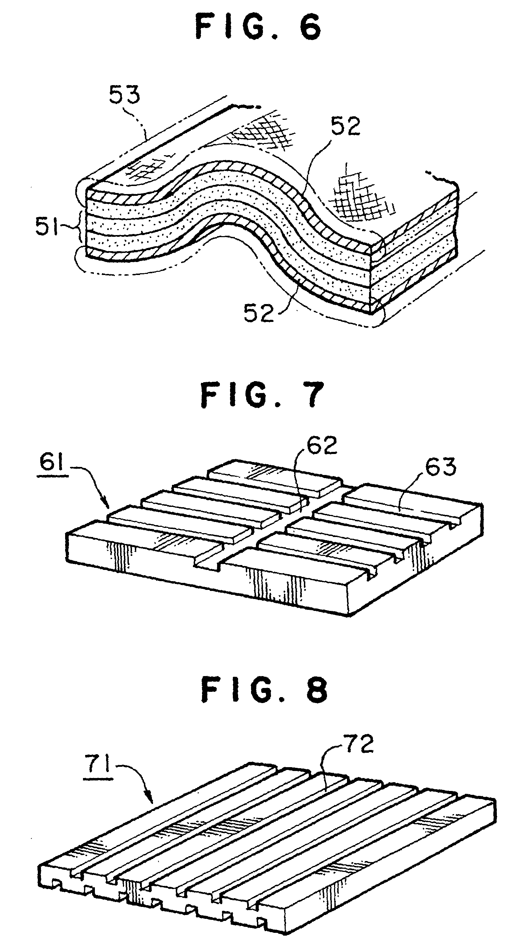

FRP structural materials structured as the above-described respective formations are manufactured as follows. For example, as shown in Figure 6, a reinforcing fiber substrate 52 is disposed on each surface of a stacked body of core materials 51, the whole of a portion disposed with the reinforcing fiber substrate 52 is covered with a bag substrate 53 (for example, a bag film), and the inside is evacuated (reduced in pressure), and a resin is injected and impregnated into the reinforcing fiber substrate 52. The resin is cured to form an FRP skin layer, and an FRP structural material integrally formed with the FRP skin layer and the core material is obtained. In a case where the resin can be sufficiently impregnated without providing bag substrate 53, setting of the bag substrate 53 and evacuation may not be performed.

To sufficiently distribute the injected resin and to impregnate it into reinforcing fiber substrate 52 at a good condition, it is preferred to interpose a resin distribution medium between a surface of core material 51 and reinforcing fiber substrate 52, or between bag substrate 53 and reinforcing fiber substrate 52.

Although this resin distribution medium can be disposed as a separate member such as a net-like material, it is possible to provide a groove on a surface of core material 51 and give the groove a function as a resin distribution medium. An embodiment to use a resin distribution medium comprising a net-like material will be explained in detail in other paragraphs of the embodiment described later.

In the method for providing a groove on a surface of a core material, for example, as shown in Figure 7, by defining a large groove 62 and a plurality of small grooves 63, which communicate with the large groove 62 and extend in the direction intersecting the large groove 62, on one surface (a surface in contact with a reinforcing fiber substrate) of the core material 61, a resin injected from an entrance of large groove 62 can be distributed and diffused to each small groove 63. While the resin is distributed, the resin is impregnated into the reinforcing fiber substrate, and therefore, the resin distribution is performed quickly and uniformly, and at the same time the impregnation is also quickly performed.

In a case where a reinforcing fiber substrate is disposed on each surface of a core material, a groove as shown in Figure 7 may be provided on each surface of the core material. Further, in a case where it is difficult to form large grooves on both surfaces, for example as shown in Figure 8, small grooves 72 can be disposed so that the respective small grooves 72 are positioned offset from each other.

Although the reinforcing fiber of an FRP material according to the present invention is not particularly restricted, for example, it is preferred to use a unidirectional material, a woven fabric, a mat or a strand of a carbon fibers, or a unidirectional material, a woven fabric, a mat or a roving of glass fibers, at a single or mixture formation. Especially, it is preferred to use carbon fibers in order to achieve an effect of lightweight property as much as possible. Further, as to the carbon fibers, it is preferred to use a tow-like carbon fiber filamentary yarn the number of filaments of which is in the range of 10,000 to 300,000, more preferably in the range of 50,000 to 150,000, rather than to use a carbon fiber filamentary yarn having a usual number of filaments of less than 10,000, because of better resin impregnation property, handling ability of a reinforcing fiber substrate, and economy of a reinforcing fiber substrate. Further, it is more preferable that a woven fabric of carbon fibers is disposed on a surface of an FRP structural material, because the design of the surface is enhanced. Furthermore, depending upon requirements, or, depending upon required mechanical properties and the like, a reinforcing fiber substrate is formed by stacking a layer of reinforcing fibers in a plural state, and a resin is impregnated into the reinforcing fiber substrate. As the reinforcing fiber layer to be stacked, a unidirectional fiber layer or a woven fabric can be employed for an appropriate stacking, and the direction of the arrangement of the fibers also can be appropriately selected in accordance with the direction of strength to be required.

As a resin of an FRP, a thermosetting resin such as an epoxy, an unsaturated polyester, a phenol or a vinyl ester is preferable from the viewpoints of molding property and cost. However, a thermoplastic resin such as a nylon or an ABS resin, or a resin mixed with a thermosetting resin and a thermoplastic resin can be also used.

With respect to a core material, a wood and the like other than a foaming material can be used, but a foaming material is preferable from the viewpoint of lightweight property. As to the raw material of the foaming material, a polyurethane, a polystyrene, a polyethylene, a polypropylene, PVC, a silicone and the like are preferably used, and the specific gravity thereof is preferably selected within the range of 0.02 to 0.2. The raw material and the specific gravity of the core material can be selected depending upon the property required for an FRP structural material and the kind of a resin used thereto. If a raw material with the specific gravity of less than 0.02 is used, a sufficient strength may not be obtained. If the specific gravity is more than 0.2, the strength becomes higher, but it would obstruct against the aim of lightweight property because of the increased weight.

In the above-described FRP structural material and process for manufacturing the same according to the present invention, since a core material of an FRP structural material is composed of a stacked body of thin core materials, a substantially freely curved surface portion can be formed while ensuring a lightweight property, a strength and a stiffness required for the whole of the FRP structural material, and an FRP structural material having a curved surface portion with a relatively small radius of curvature also can be easily manufactured.

Next, embodiments of an FRP sandwich structural material containing a seamless, enclosed hollow core material between a pair of plates and a process for manufacturing the same will be explained.

In this embodiment, a seamless, enclosed hollow core material is used in a gap between the plates of a sandwich structural material instead of a usual core material or a part thereof, and an FRP sandwich structural material having high strength and stiffness can be obtained at a low cost. This seamless, enclosed hollow material can be used when molding, instead of a usual core material, even in a hand lay-up molding method which is the most popular FRP molding method. Further, even in a vacuum molding method, as an inside pressure of a seamless, enclosed hollow core material may be same of a normal air pressure, even when the inside of the whole portion covered with a film substrate is evacuated for molding, an outside pressure and the inside pressure of the seamless, enclosed hollow core material are balanced, and therefore, the molding may be performed without breaking the seamless, enclosed hollow material.

Further, if a core material with seam is used as a hollow core material, particularly when molding by RTM method, the seam portion (the seam portion due to bonding such as adhesion) is liable to be broken by a resin pressure, and a trouble, that a resin enters into the inside of the core material, is likely to occur. By using a seamless, enclosed hollow core material as a hollow material, such a trouble can be prevented.

Although the seamless, enclosed hollow core material is not particularly limited, especially one, formed by using a thermoplastic resin and formed by injection molding or blow molding, particularly by blow molding, is very advantageous from the viewpoint of cost. By blow molding, a seamless, enclosed hollow core material having a desired shape can be easily molded. Therefore, even if any shape is required for a sandwich structural material, it can be produced by changing the shape of a seamless, enclosed hollow core material. For example, even though a dimension of a gap between a pair of plates of a sandwich structural material is varied, or even though one of the plates has a folded plate structure in that a mountain part and a valley part are alternately disposed, the material can be easily produced.

Although any value may be available as the size of a seamless, enclosed hollow core material, if the volume is too small, the effect of lightweight property becomes hard to be indicated, and therefore, a volume of 1000 $cm^3$ or more is preferably employed. If the volume is too large, because a structural problem may be caused, 100,000 $cm^3$ or less is preferable.

Further, the thickness of a seamless, enclosed hollow core material is preferably in the range of 0.5 mm to 5 mm. If the thickness is less than 0.5 mm, in addition that there is a fear that the strength of the whole of a hollow core material may be decreased, for example, the core material is likely to be broken or deformed when evacuated in RTM molding method. If the thickness is more than 5 mm, the lightweight property may be damaged and the cost may increase because of increase of amount of raw material.

When a seamless, enclosed hollow core material is used instead of the whole of or a part of a core made from a usual foamed material, reduction of cost becomes possible. Depending upon physical properties required for a sandwich structural material, a wood, a concrete and the like can be used along with a seamless, enclosed hollow core material.

In a pair of plates forming a sandwich structural material according to the present invention, at least one of them is a plate containing FRP in order to ensure the lightweight property. The thickness of this plate is preferably in the range of 0.6 to 7 mm. If less than 0.6 mm, in addition that it is difficult to obtain desired strength and stiffness, there is a high possibility that a scratch, which runs through the plate by an impact, may be caused. On the other hand, if more than 7 mm, although the strength and stiffness are sufficient, there is a defect that the material becomes very heavy.

A plate having a structure integrally formed with an FRP and a metal also can be used as the above-described plate, depending upon various properties required for a sandwich structural material. Further, for example, it is possible that, among the plates forming a sandwich structural material, inner and lower surfaces are formed from FRP, and an upper surface is formed from an noncombustible material such as a metal, a concrete and a mortar from fire-proof requirement.

As the reinforcing fiber of an FRP, a glass fiber, an aramide fiber, a carbon fiber and the like are usually used. To obtain an FRP with a lightweight property and a high strength, a carbon fiber is most preferable, but a hybrid of a glass fiber/a carbon fiber is also preferable for balancing with the cost. As the formation of fibers used, a cloth, a mat, a strand and the like can be preferably employed. Further, as the kind of the carbon fiber to be used, although any kind of carbon fiber may be used in consideration of its high strength and stiffness, from the viewpoint of reduction of cost, it is most preferable to use a so-called large tow carbon fiber.

For example, it is preferred to use a tow-like carbon fiber filamentary yarn the number of filaments of which is in the range of 10,000 to 300,000, more preferably in the range of 50,000 to 150,000, rather than to use a carbon fiber filamentary yarn having a usual number of filaments of less than 10,000, because of better resin impregnation property, handling ability of a reinforcing fiber substrate, and economy of a reinforcing fiber substrate. Further, it is more preferable that a woven fabric of carbon fibers is disposed on a surface of an FRP structural material, because the design of the surface is enhanced. Furthermore, depending upon requirements, or, depending upon required mechanical properties and the like, a reinforcing fiber substrate is formed by stacking a plurality of layers of reinforcing fibers, and a resin is impregnated into the reinforcing fiber substrate. As the reinforcing fiber layer to be stacked, a unidirectional fiber layer or a woven fabric can be employed for an appropriate stacking, and the direction of the arrangement of the fibers also can be appropriately selected in accordance with the direction of strength to be required.

Further, as the resin of the FRP, a vinyl ester resin, an unsaturated polyester resin, a phenol resin and the like is preferably used, and especially, for the application of a building material and a construction material, because there is a standard with respect to burning, a phenol resin is most preferably used.

As the structure of a sandwich structural material, any structure may be employed as long as a pair of plates are disposed at a certain gap provided therebetween, there is a rib structural material in the gap for connecting the upper and lower plates, and there exists a seamless, enclosed hollow core material in the gap. Further, a sandwich structural material, wherein at least one plate is formed as a folded plate disposing a mountain part and a valley part alternately, is also appropriately used, depending upon applications.

As the form of the pair of plates, a flat plate, a waved plate and the like can be selectively employed depending upon uses. Further, as to the gap between the pair of plates, both of a structure having a substantially constant gap and a structure having a varying gap can be employed with no problems.

As the rib structure, a structure, wherein a rib extends perpendicular to both of the pair of plates and the rib connects both plates, may be employed, and a rib structure such as a truss structure or a rahmen structure also may be employed.

When the sandwich structural material is used for a building material and the like, a fire-proof material may be provided on at least one surface based on a requirement for fireproofing. As the fire-proof material, a rock wool molding sheet, a resin foamed material, a felt material of a rock wool, a felt material made of ceramic fibers, a paint for fire-proofing, a foaming paint, a sealant for fire-proofing and the like, or a mixture of these materials may be appropriately used.

Hereinafter, a process for manufacturing the above-described sandwich structural material will be explained in due order.

(1) Reinforcing fibers are disposed on a mold. At that time, as a method for disposing the reinforcing fibers, although there is a method for disposing the fibers on the mold as they are, it is preferred to dispose the fibers previously formed as a cloth from the viewpoint of efficient manufacture.

(2) A seamless, enclosed hollow core material wound with reinforcing fibers is disposed on the above-described disposed reinforcing fibers. As the seamless, enclosed hollow core material, a material formed by, for example, blow molding depending on a desired shape of a sandwich structural material can be used. Further, reinforcing fibers may be inserted between adjacent seamless, enclosed hollow core materials so that they can form a rib after resin injection. Alternatively, the reinforcing fibers wound on a seamless, enclosed hollow material themselves may be used to form a rib without inserting reinforcing fibers. As a core material, in accordance with the properties of a sandwich structural material, not only a seamless, enclosed hollow core material itself but also a seamless, enclosed hollow core material combined with an organic foaming material, a wood, a concrete and the like may be used.

(3) Further, reinforcing fibers for forming an upper surface of a sandwich structural material is disposed.

(4) The whole of a body to be molded is covered with a film substrate for evacuation.

(5) The inside being covered is evacuated.

(6) A resin is injected into the inside and impregnated into the reinforcing fibers. At that time, as an assisting means for impregnation, a groove forming a resin path may be defined on at least one surface of a seamless, enclosed hollow core material or a core material used along with it. In a case where a body to be molded is large, particularly such an assisting means for resin impregnation is effective. Further, as a resin distribution medium, another material such as a net-like material and the like can be disposed.

(7) After the resin is cured, a mold is removed. Heat may be given for the curing as needed. Further, after removal of the mold, heat may be further given as after-curing.

Hereunder, a more concrete embodiment for a sandwich structural material described above will be explained by using of figures.

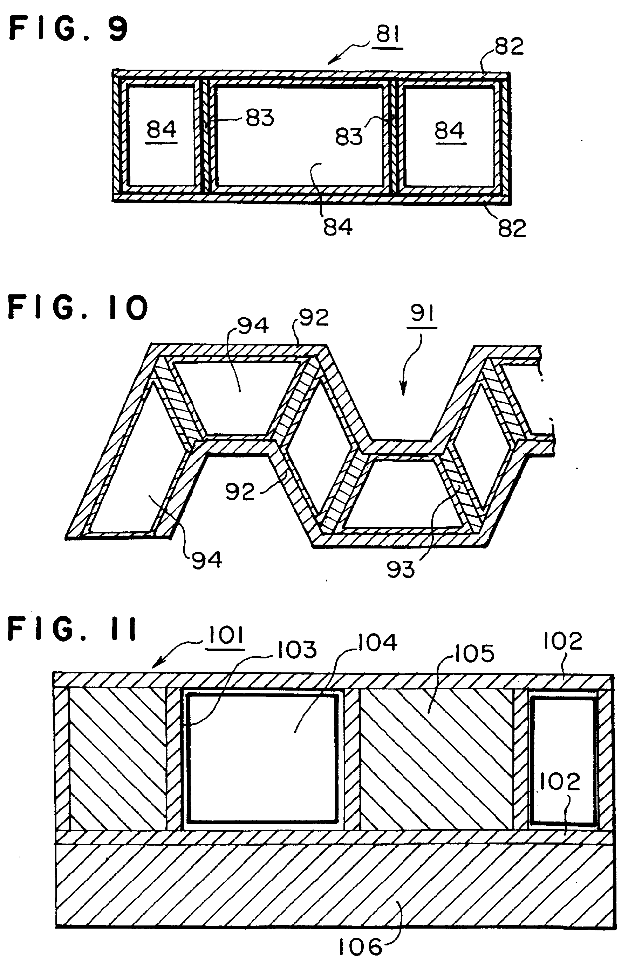

Figure 9 shows an embodiment of a sandwich structural material described above. A sandwich structural material 81 comprises upper and lower plates 82 made from FRP and ribs 83, and seamless, enclosed hollow core materials 84 are contained in the sandwich structural material. The side walls of rib 83 and seamless, enclosed hollow core material 84 may be integrally molded.

Figure 10 shows another embodiment. A sandwich structural material 91 formed as a folded plate shape comprises upper and lower plates 92 made from FRP and ribs 93, and seamless, enclosed hollow core materials 94 are contained in the sandwich structural material 91. The side walls of rib 93 and seamless, enclosed hollow core material 94 may be integrally molded.

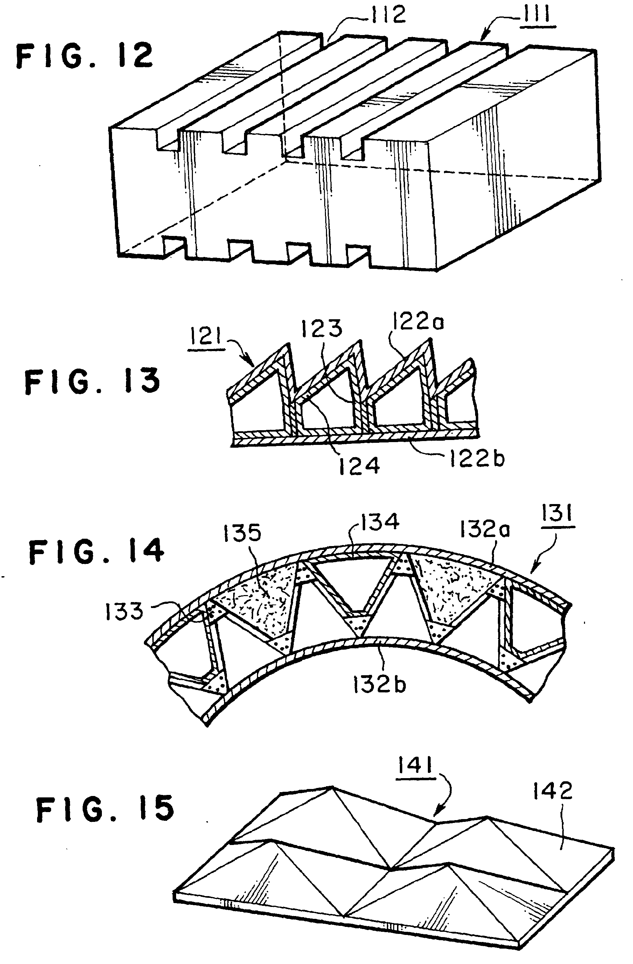

Figure 11 shows a further embodiment. A sandwich structural material 101 comprises upper and lower plates 102, ribs 103, seamless, enclosed hollow core materials 104 and cores of an urethane foamed material 105, and a layer of a fireproof material 106 is provided on one surface of the sandwich structural material 101.

Figure 12 shows an embodiment of a seamless, enclosed hollow core material. Grooves 112 are formed on a surface of a seamless, enclosed hollow core material 111 depicted in Figure 12 (the upper and lower surfaces in the Figure), and the grooves function as resin flow paths at the time of molding.

Figure 13 shows an example wherein one plate 122a of a pair of FRP plates 122a and 122b of a sandwich structural material 121 has a folded-plate structure, and a gap between the both plates varies in the extending direction of the plates. Label 123 shows a rib, label 124 shows a seamless, enclosed hollow core material. The side walls of rib 123 and seamless, enclosed hollow core material 124 may be integrally molded.

In a sandwich structural material 131 shown in Figure 14, a truss structural body 133 is provided as a rib structural material between a pair of FRP plates 132a, 132b. And the Figure shows an example providing seamless, enclosed hollow core materials 134 and normal core materials 135 at appropriate positions inside.

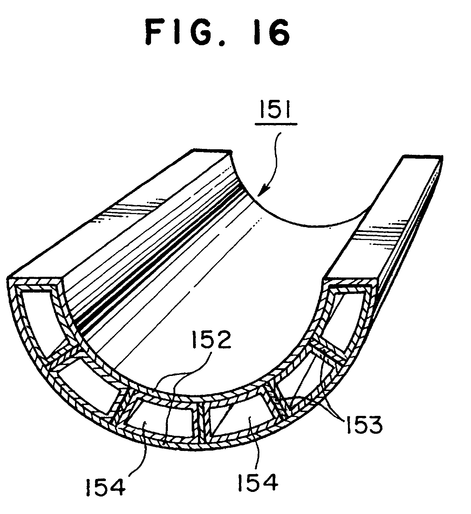

Further, Figure 15 shows that a sandwich structural material 141 can have any kind of shape as a whole, and in the depicted example, shown is a shape wherein pyramid-like portions 142 are connected to each other.

In particular, a sandwich structural material 151 formed as a semicircular shape as shown in Figure 16 is more suitable to use it as a roof material. In Figure 16, label 152 shows a pair of FRP plates, label 153 shows ribs, and label 154 shows seamless, enclosed hollow materials.

Thus, a sandwich structural material containing a seamless, enclosed hollow core material according to the present invention can accept various kinds of shapes. Especially, various kinds of shapes suitable for a building material such as a roof material and the like can be employed, and sufficient mechanical properties can be provided while a lightweight property can be ensured, and besides, it can be manufactured at a low cost.

As described hereinabove, in the FRP sandwich structural material containing a seamless, enclosed hollow core material and the process for manufacturing the same according to the present invention, a sandwich structural material manufactured at a low cost and having sufficient properties can be provided.

Next, an embodiment for an FRP structural material and a process for manufacturing the same will be explained, wherein a recessed portion, into which a flange portion of a reinforcing material is fitted, is defined on at least one surface of the one end portion of a core material, a groove communicating with the recessed portion and forming a resin path at the time of molding is defined on the core material, and an FRP plate, the FRP reinforcing material and the core material are integrally molded with a resin.

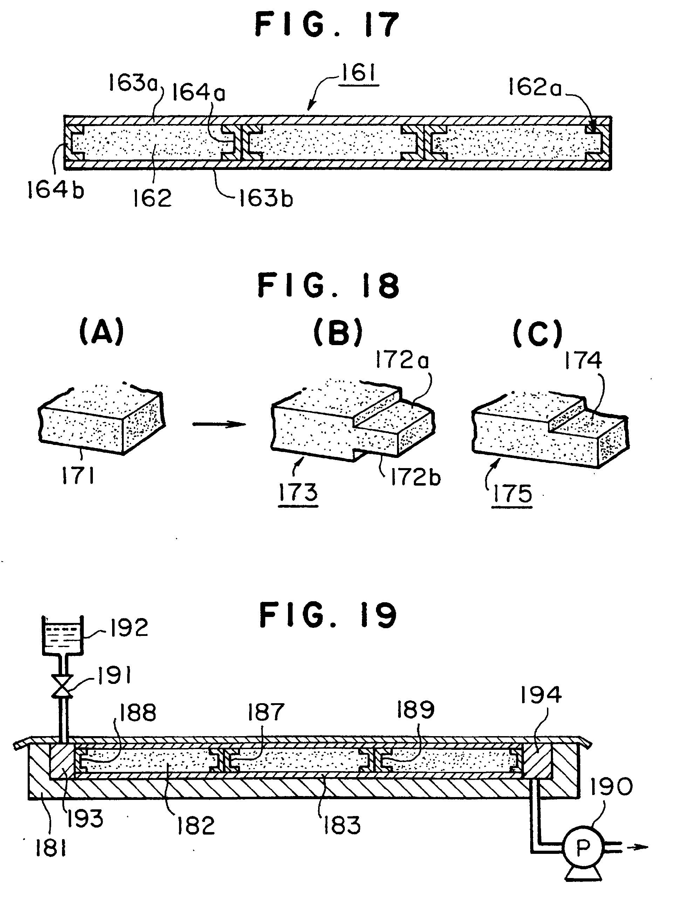

An FRP structural material 161 shown in Figure 17 has a core material 162, FRP plates 163a, 163b disposed on at least one surface (both surfaces in this embodiment) of the core material 162, and FRP reinforcing materials 164a, 164b each having a U-shaped cross section disposed on at least one end portion (both end portions in this embodiment) of each core material 162. The reinforcing material 164a disposed on the center of FRP structural material 161 functions as a rib for reinforcement, and the reinforcing material 164b disposed on the end portion functions as a cap member. For these reinforcing materials 164a, 164b, a L-shaped, a T-shaped, or an I-shaped cross section and the like may be employed other than the U-shaped cross section. Any shape may be employed as long as it has both a portion extending substantially in parallel to FRP plate 163a or 163b and a portion extending perpendicular thereto. This portion that extends substantially in parallel to the FRP plate, the flange portion having a U-shaped cross section in the example shown in Figure 17, is fitted into the recessed portion 162a which is formed on at least one surface of an end portion of core material 162. The depth of this recessed portion 162a is preferred to be substantially equal to a thickness of a portion of the reinforcing material to be fitted thereinto, thereby ensuring a flatness of an FRP plate disposed on it.

The recessed portion of core material 162 is formed, for example, as shown in Figure 18. In Figure 18, (A) shows a raw material 171, for example, for a core material formed from a foamed material, and this raw material is formed in, for example, a rectangle. A recessed portion is cut out on at least one end portion of this raw material 171 as shown in Figure 18 (B) or (C). In the example shown in Figure 18 (B), a core material 173 is formed wherein recessed portions 172a, 172b are provided on both surfaces so that a reinforcing material with a U-shaped cross section such as one shown in Figure 17 can be fitted thereinto. In the example shown in Figure 18 (C) , a core material 175 is formed wherein a recessed portion174 is provided only on one surface of the core material.

An FRP structural material described above can be formed by an RTM process due to a vacuum bag method. The molding by this RTM process is performed, for example, as shown in Figure 19. Referring to Figure 19, molding of an FRP structural material having a sandwich structure will be explained.

In the process shown in Figure 19, in a mold 181, a core material 182 formed from a foamed body and the like is disposed, and reinforcing fiber substrates 183 are disposed on at least both surfaces of the core material 182. The core material 182 is formed as a plurality of parts in this embodiment, and the plurality of core materials 182 are arranged in the longitudinal and transverse directions as a plan view. The end portion of the row of the arranged core materials 182 may be structured such that the reinforcing fiber substrate 183 is disposed to wrap the core material 182, or may be structured such that a cap-like reinforcing fiber substrate 188 having a U-shape is disposed as shown in Figure 19.

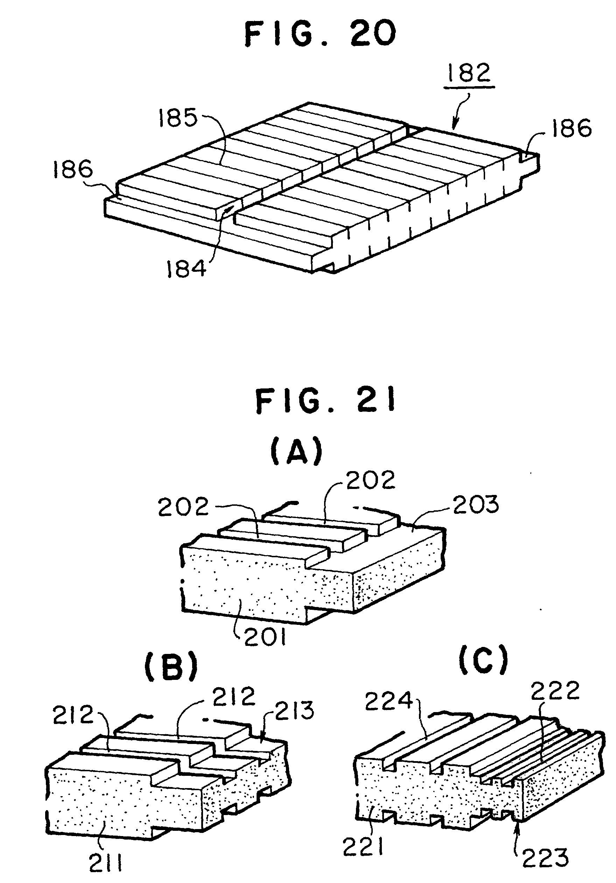

Each core material 182 is constructed as shown in Figure 20, and it has a large groove 184 forming a resin path and a plurality of small grooves 185 communicated with the large groove 184 and diverged from the large groove 184. A resin is distributed in the surface direction of reinforcing fiber substrate 183 through this large groove 184 and the small grooves 185, and the distributed resin is impregnated into the reinforcing fiber substrate 183 in its thickness direction. Although the distribution path for distributing a resin in the surface direction of the substrate is formed by the groove portions on the core material 182 itself in this embodiment, a sheet-like medium made as another material may be provided to distribute a resin in the surface direction of the reinforcing fiber substrate, separately from this structure or along with this structure. Such a medium can be disposed on the upper surface of reinforcing fiber substrate 183 or on both upper and lower surfaces thereof. Although the structure of the medium is not particularly restricted, a sheet-like material with a groove structure similar to that shown in Figure 20, or a sheet-like material with grooves extending in the longitudinal and transverse directions, or further, a net-like material and the like, can be employed.

In the embodiment shown in Figure 20, recessed portions 186 are formed on both sides (or four sides) of core material 182, and reinforcing fiber substrate 187 for forming a reinforcing material for a rib with a U-shaped cross section is disposed on each recessed portion 186 as shown in Figure 19. At the central portion of the structural material, these U-shaped reinforcing fiber substrates 187 for forming a rib are abutted to each other, and on the end portion of the arranged core materials 182, U-shaped reinforcing fiber substrate 188 for a cap is disposed, and these members together with core material 182 are covered with reinforcing fiber substrates 183 disposed on both surfaces. However, in the case where the end portion of the arranged core materials 182 is covered with reinforcing fiber substrate 183, it is not always necessary to provide U-shaped cap-like reinforcing fiber substrate 188.

The mold upper surface side of the above-described reinforcing fiber substrate 183 is covered with a bag film 189, and the inside is evacuated by suction due to a vacuum pump 190. Then, by opening a valve 191, a liquid resin 192 is injected into the mold 181, which is kept at a vacuum condition described above. The injection is performed via an edge breather 193 made from a porous material and the like, and the suction to the vacuum pump 190 is also performed via a same kind of edge breather 194. The position for resin injection, the position for suction to evacuate, and the position for setting edge breathers 193, 194, may be appropriately changed. For example, a resin may be injected from a central portion of an FRP structural material. Further, although the upper surface of reinforcing fiber substrate 183 is directly covered with bag film 189 in this embodiment, a mold-separation material, which is removed after molding (not shown), may be interposed therebetween, as needed. In the above-described embodiment, bag film 189 itself has a function as a mold-separation material. As the mold-separation material provided as needed, a mold-separation material, which can pass a resin and can be removed from an FRP structural material by being peeled after cure, is preferable (for example, a taffeta sheet made from nylon and the like). Furthermore, a rigid plate such as an iron plate may be disposed between bag film 189 and the mold upper surface side of reinforcing fiber substrate 183.

As described above, the injected resin is quickly distributed in the surface direction of reinforcing fiber substrate 183 along large groove 184 and small grooves 185 of core material 182 while gradually impregnated in the thickness direction of reinforcing fiber substrate 183. At the same time, the resin is impregnated also into U-shaped reinforcing fiber substrates 187, 188 for forming a rib and a cap, and the rib and the cap are integrally molded. The impregnated resin is cured at a room temperature or by heating as the cases may be, to complete an FRP structural material. After curing, bag film 189 is removed, and a cured FRP structural material is taken out from mold 181. Thus, an FRP structural material is integrally molded.

In the above-described molding, the grooves provided on a core material become resin paths at the time of molding. The relationship between the grooves and the aforementioned recessed portion provided on a core material may employ various kinds of aspects.

For example, as shown in Figure 21 (A), a plurality of grooves 202 are defined in parallel to each other on a core material 201, and if they are formed so as to communicate with a recessed portion 203 formed on an end portion, a resin can be smoothly introduced into the recessed portion 203 at the time of molding, and the resin can be distributed into a substrate for forming a reinforcing material, which is disposed on that portion. Further, as shown in Figure 21 (B), if a core material 211 is formed wherein grooves 212 extend up to the bottom surface of recessed portion 213, a better resin distribution may be performed, and because the extended groove portions are formed on a portion filled with only resin or on a resin-rich portion, they can make resin escape means, thereby serving to decrease a void ratio of an FRP molded portion.

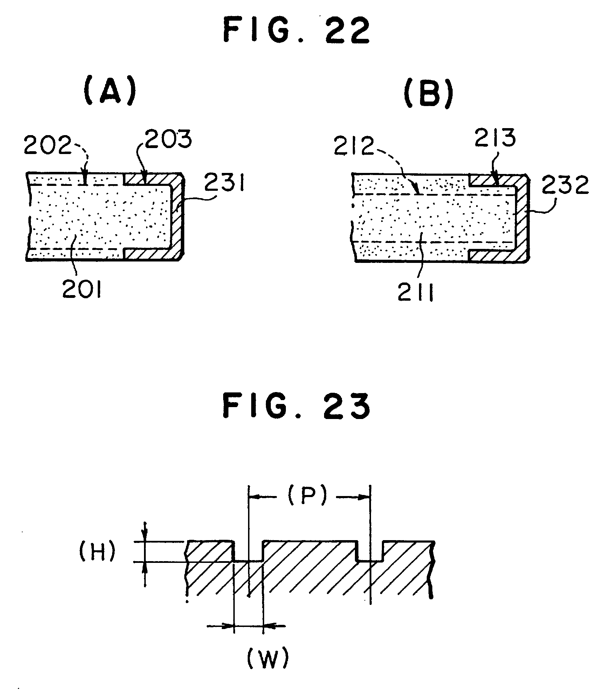

Structures disposing FRP reinforcing materials 231, 232 or reinforcing fiber substrates for forming the reinforcing materials on core materials 201, 211 shown in Figures 21 (A) and 21 (B) are shown in Figure 22 (A) and 22 (B), respectively.

Further, as shown in Figure 21 (C), a groove 222 extending in a direction in parallel to the extending direction of recessed portion 223 can be defined, and further, grooves 224 also can be defined in parallel to the groove 222 on the surface of another portion of core material 221. The groove 222 mainly contributes to the resin distribution into the portion provided with a reinforcing material, and the grooves 224 serve to distribute a resin into a reinforcing fiber substrate for forming an FRP plate.

As to the groove formed on a core material described above, as shown in Figure 23, the pitch, the depth and the width can be appropriately determined depending upon molding conditions (temperature, pressure and the like) or a viscosity of a resin to be used. For example, when a depth of a large groove is referred to as H, the groove width is referred to as W, and the groove pitch is referred to as P, it is preferred to satisfy the following relationship.

$$\text{(a) } 200 \geqq W \times H \geqq 5 \text{ (mm}^2\text{)},$$

$$\text{(b) } 300 \geqq P \geqq 100 \text{ (mm)}$$

Further, when a depth of a small groove is referred to as h, the groove width is referred to as w, and the groove pitch is referred to as p, it is preferred to satisfy the following relationship.

$$\text{(a) } 100 \geqq w \times h \geqq 1 \text{ (mm}^2\text{)},$$

(b) $100 \geqq p \geqq 5$ (mm)

If W × H or w × h is too small, the molding speed becomes slow. On the contrary, if too large, the amount of resin becomes great, and therefore, the weight of a molded product becomes great. If the pitch P or p is too narrow, the amount of resin becomes great and the weight of a molded product becomes great. On the contrary, if too wide, the molding speed becomes slow, and a poor impregnation occurs, thereby causing a difficulty for a stable molding.

Thus, an optimum core material with a recessed portion and a groove is designed, and by this design, the integral molding of the whole of an FRP structural material including a reinforcing material can be facilitated. In such an FRP structural material and a process for manufacturing the same, particularly by optimizing a structure of a core material, a relatively large FRP structural material with a lightweight, high strength and high stiffness properties can be manufactured more easily and inexpensively by integral molding.

Further, a core material, and an FRP rib integrally molded with the core material, can employ various kinds of formations.

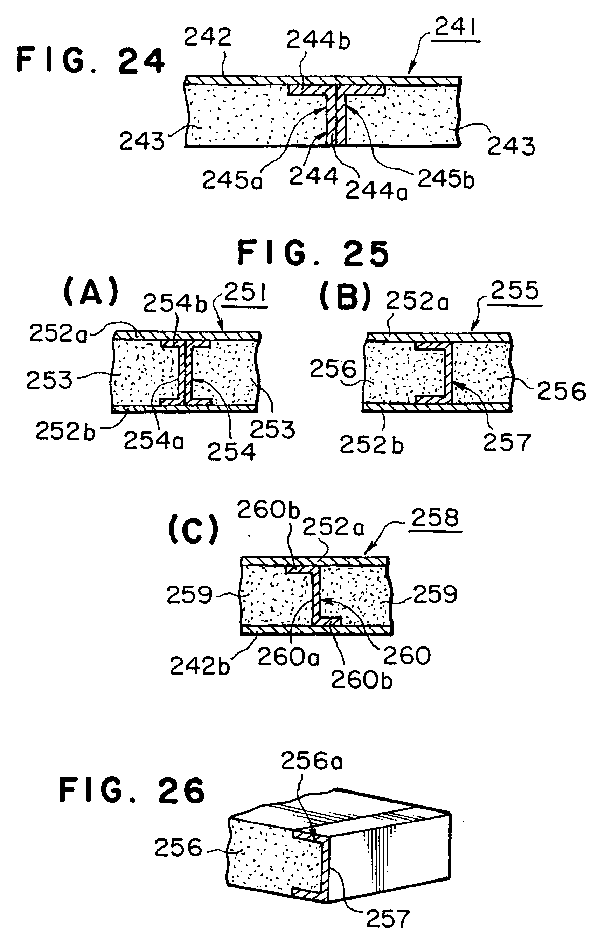

For example, cross sectional forms can be employed as shown in Figures 24 and 25. Figure 24 shows an example of a structure that an FRP plate is disposed on one surface of a core material, and Figure 25 shows an example of a sandwich structure that FRP plates are disposed on both surfaces of a core material.

In Figure 24, label 241 indicates an FRP structural material, and the FRP structural material 241 comprises an FRP plate 242, core materials 243 disposed on one surface of the FRP plate 242, and a rib 244 disposed between core materials 243 with a web portion 244a extending in a direction substantially perpendicular to the FRP plate 242 and a flange portion 244b extending in the surface direction of the FRP plate 242. The rib 244 comprises rib forming materials 245a, 245b having reverse L-shaped cross sections, and these materials are formed as an integral FRP member and they form a single rib 244. This rib 244 is bonded integrally to the FRP plate 242. Further, the core material 243 is formed as a plurality of members, and the rib 244 is disposed between adjacent core materials 243.

As the core material 243 (similarly in the structure shown in Figure 25), a foamed material or a wood and the like can be employed, and a foamed material is preferable from the viewpoint of lightweight property. As the raw material of the foamed material, polyurethane, polystyrene, polyethylene, polypropylene, PVC and silicone and the like are used, and its specific gravity is preferably selected within the range of 0.02 to 0.2. If a material whose specific gravity is less than 0.02 is used, there is a fear that a sufficient strength cannot be obtained. If the specific gravity is more than 0.2, although the strength become high, the weight becomes great and it does not meet with the purpose of lightening. Further, a honeycomb material can be employed as a core material. As the raw material of a honeycomb material, there are an aluminum honeycomb and an aramide honeycomb and the like, and the raw material and the dimension thereof can be selected depending upon a required strength and the like.

Figures 25 (A), (B) and (C) show examples of sandwich structures. In an FRP structural material 251 shown in Figure 25 (A), FRP plates 252a, 252b (FRP skin layers) are disposed on both surfaces of a core material 253, and an FRP rib 254 is disposed between both FRP plates 252a and 252b. The rib 254 is formed by connecting two rib forming materials each having a U-shaped cross section in a formation back to back, and the rib 254 has a web portion 254a and a flange portion 254b. In an FRP structural material 255 shown in Figure 25 (B), a rib 257 is formed by disposing an FRP member having a U-shaped cross section between adjacent core materials 256. In an FRP structural material 258 shown in Figure 25 (C), a rib 260 is formed from an FRP member having flange portions 260b extending in the directions opposite to each other relative to a web portion 260a.

When a rib as described above is disposed, for example, as shown in Figure 26 as an example of the formation shown in Figure 25 (B), it is recommended that after a recessed portion 256a is formed on each of upper and lower surfaces of at least one end (one side) of the core material 256, a flange portion of the rib 257 is disposed on this recessed portion 256a. By equalizing the thickness of this flange portion to the depth of the recessed portion 256a, a substantially one surface structure becomes possible, and therefore, a flatness of each of FRP plates 252a and 252b disposed thereon can be maintained in a good condition.

An FRP structural material as described above can be molded by a vacuum RTM method similar to that shown in Figure 19.

In the integral molding of the FRP structural material, various kinds of formations can be employed as a method for forming a rib.

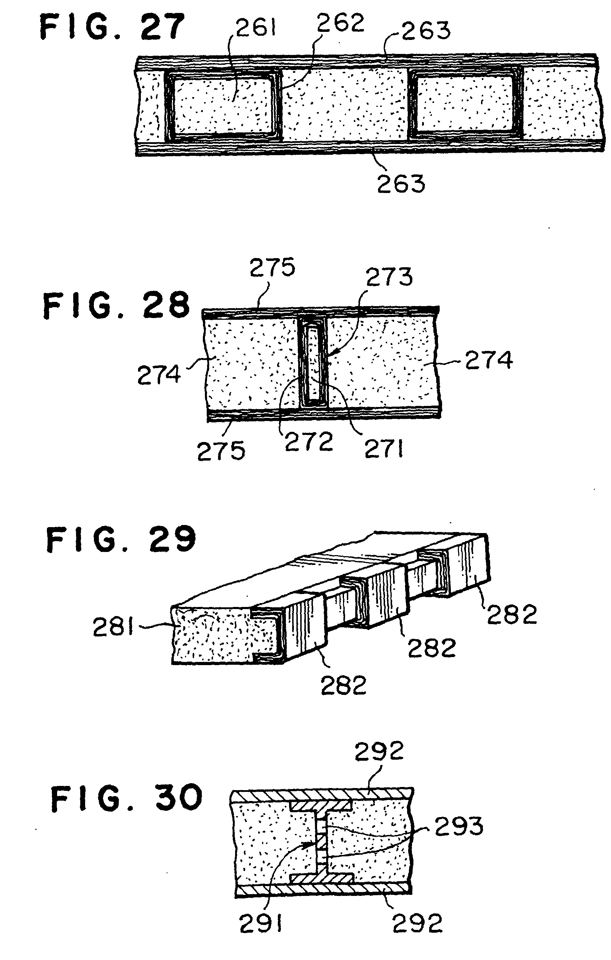

For example, as shown in Figure 27, when an FRP structural material with a sandwich structure is molded, a reinforcing fiber substrate 262 for forming a rib is wound on a core material 261, an arrangement body of core materials 261 is formed by appropriately disposing core materials 261 each wound with the reinforcing fiber substrate 262, and reinforcing fiber substrate 263 for forming an FRP plate is disposed on each of upper and lower surfaces thereof. Under this condition, the whole may be integrally molded based on the process shown in Figure 19. In this process, a desired disposition of the reinforcing fiber substrate 262 for forming a rib can be performed extremely easily.

Further, as shown in Figure 28, a process may be employed wherein a rib forming substrate 273 comprising a rib forming core material 271 (for example, a relatively thin foamed material) and a rib forming reinforcing fiber substrate 272 is formed in advance, the rib forming substrate 273 is appropriately disposed on a desired portion, and then the substrate 273 is integrally molded together with core materials 274 and reinforcing fiber substrates 275 for forming FRP plates.

Furthermore, although a Figure is omitted, a process may be employed wherein a rib forming substrate is prepared as a preformed FRP substrate, and the rib forming substrate is appropriately disposed on a desired portion, and the whole is molded at a time. As this rib forming substrate, except a structure of an FRP single plate, a preformed FRP member enclosing a core material can be employed as shown in Figure 28.

Further, as to the disposition of a rib, various kinds of embodiments can be employed. For example, as shown in Figure 29, ribs 282 can be disposed discontinuously in the surface direction of an FRP plate (in a direction of a side of a core material 281) relative to the core material 281. In such a disposition, a portion between ribs 282 can be utilized as a resin path at the time of integral molding, and the resin distribution and the resin impregnation may be further smoothened. Further, because the portion between ribs 282 can be formed as a portion formed by only resin or a resin-rich portion, in a case where voids are likely to be generated, voids may be collected in this portion and the void ratio in the FRP portion may be reduced, and therefore, it can serve to increase the strength of the FRP portion.

Further, for example, as shown in Figure 30, a structure may be employed wherein a rib 291 has discontinuous portions 293 in the direction perpendicular to FRP plates 292, namely, discontinuous portions 293 are provided in a web part portion. The discontinuous portion 293 may extend continuously in a direction parallel to FRP plate 292, but a hole structure is preferably employed. By employing such a structure, while at least a minimum strength required as rib 291 can be maintained, a resin path and a void escaping path at the time of molding can be formed.

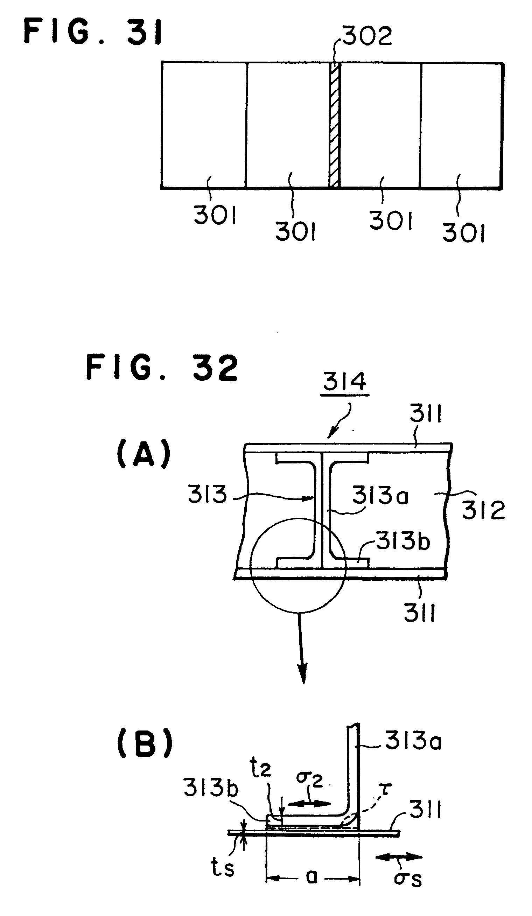

Further, as shown in Figure 31, in a case where a plurality of core materials 301 is arranged, a rib forming substrate 302 may not be disposed at all positions between adjacent core materials 301. Namely, a portion with a rib and a portion without a rib may be mixed, in accordance with a strength and the like required for the whole of an FRP structural material.

A surface layer comprising a decorative layer, a noncombustible layer, a fireproofing layer and the like may be provided on the surface (one surface or both surfaces) of an FRP structural material according to the above-described embodiment, or a noncombustible agent and the like may be compounded in an FRP plate itself.

In an FRP structural material according to the present invention, a rib portion contributes to maintain the strength and stiffness of the whole of the FRP structural material at high levels. From this point of view, the desirable property shape for a rib will be investigated.

As shown in Figure 32, as to an FRP structural material 314 (see Figure 32 (A)) of a sandwich structure having FRP plates 311 (FRP skin plates) on both surfaces of a core material 312, and a rib 313 with a web portion 313a and a flange portion 313b between FRP plates 311, the flange portion 313b is picked out as shown in Figure 32 (B), and the relationship in strength between the FRP skin plate 311 and the flange portion 313b will be considered.

The following relationship stands from a flange length "a" and a valid efficiency of a connection K between the flange portion 313b and the FRP skin plate 311 (a rate of an area of a portion effectively bonded).

$$\max (\sigma_2 t_2, \sigma s ts) \geqq K \tau a \geqq \min (\sigma_2 t_2, \sigma s ts) \tag{1}$$

Where, max $(\sigma_2 t_2, \sigma s ts)$ shows a greater value of $\sigma_2 t_2$ and $\sigma s ts$, and min $(\sigma_2 t_2, \sigma ts)$ shows a smaller value of $\sigma_2 t_2$ and $\sigma s ts$. $\sigma_2$ is a tensile strength (stress) of a flange portion, $\sigma s$ is a tensile strength (stress) of a skin plate, $t_2$ is a thickness of a flange portion, and ts is a thickness of a skin plate. $\tau$ is a share strength (bonding strength) between a flange portion and a skin plate.

As reinforcing fibers are often arranged at an angle of $\pm 45°$ for a web or flange of rib 313 and as FRP skin plates are often disposed at angles of $0°/90°$, the following relationship is introduced from above equation (1).

$$\sigma s ts / \tau \geqq K a \geqq \sigma_2 t_2 / \tau \tag{2}$$

Namely, it is preferred that a sharing strength between the flange portion 313b of rib 313 and the FRP plate 311 is not less than a tensile strength in the sharing direction of the flange portion 313b itself of the rib 313.

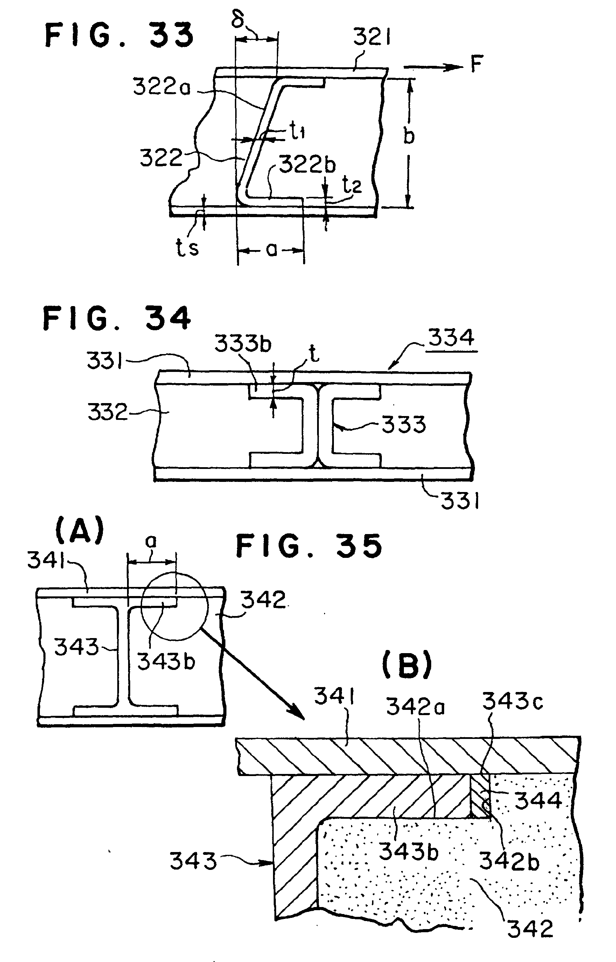

Further, in consideration of the strength of a rib portion, as shown in Figure 33, if an upper surface of an FRP skin plate 321 is deformed by $\delta$, the following equation stands from the moment balance and the generated stress in the corner portion formed between a web portion 322a and a flange portion 322b of a rib 322.

$$b \; / \; t_1{}^2 \; \varpropto \; a \; / \; t_2{}^2 \qquad\qquad \cdots \; (3)$$

Where, "b" is a length between FRP skin plates 321 (height of rib 322), "a" is a bonding length of flange portion 322b, $t_1$ is a thickness of web portion 322a, and $t_2$ is a thickness of flange portion 322b.

By transforming the above-described equation (3) to be dimensionless, the following equation stands.

$$a \, / \, a_0 = K \, (b \, / \, b_0) \, [(t_2 \, / \, t_{20}) \, / \, (t_1 \, / \, t_{10})]^2 \cdots (4) \qquad\qquad (4)$$

Where, $a_0$, $b_0$, $t_{20}$ and $t_{10}$ are standard values set up depending on a molding condition (a structure condition), and K is a proportion constant in equation (3).

Usually, in the forming of rib 322, $t_2$ is equal to $t_1$ in many cases, and the thickness of the $t_2$ portion can be regarded as a value substantially equal to a thickness of $t_2$ + ts when the flange portion and the skin plate are strongly connected, and therefore, the following equation stands when $t_2$ is substituted for $t_1$ + ts in the equation (4).

$$a \, / \, a_0 = K \, (b \, / \, b_0) \, (ts \, / \, t_1 + 1)^2 \qquad\qquad (5)$$

Where, $a_0$ and $b_0$ are standard values set up depending on a molding condition (a structure condition), K is a proportion constant, and by determining the $a_0$, $b_0$ and K by an experiment, optimum a, b, ts and $t_1$ can be designed in accordance with a required strength.

Further, also with respect to the thickness of a flange portion of a rib, an optimum design can be expected as follows. As shown in Figure 34, when an FRP structural material 334, in which FRP plates 331 are disposed on both surfaces of a core material 332 and which includes a rib 333 formed by abutting U-shaped members, is considered, and when the weight of a reinforcing fiber substrate (for example, a woven fabric) provided in a flange portion 333b (thickness: t) of a rib 333 is referred to as "w", the specific gravity is referred to as $\rho$, and the fiber volume content is referred to as Vf, the thickness $t_0$ (a design value) of this portion before molding is calculated as follows.

$$T_0 = (w \, / \, \rho) \, (1 \, / \, Vf) \qquad\qquad (6)$$

In more detail, because the reinforcing fiber substrates often employ a stacked structure, $t_0$ is expressed more accurately as a simulation per each layer as follows.

$$T_0 = \Sigma \, [(wi \, / \, \rho \, i) \, (1 \, / \, Vfi)] \qquad\qquad (7)$$

Where, the subscript i means each layer.

However, $t_0$ calculated by equation (6), (7) is a value before molding, and after FRP molding, the thickness $t_2$ of a rib flange of a formed product varies slightly depending upon molding conditions (for example, temperature, a resin viscosity, a pressure condition and the like). In other words, depending on such molding conditions, $t_2$ after molding can be controlled to any of conditions of $t_2 = t_0$, $t_2 > t_0$, and $t_2 < t_0$.

In a case of $t_2 = t_0$, because the surface of a core material and the outer surface of a rib flange portion can be formed substantially at a single flat surface, the flatness of a surface of an FRP plate disposed thereon may be good, and the Vf of a molded product may have an aimed value.

In a case of $t_2 < t_0$, by molding so that Vf of a web portion of a rib becomes high, the strength property of the rib can be increased.

In a case of $t_2 > t_0$, by designing a structure at a condition of a low Vf side, a facility of the molding can be ensured. Particularly, it is advantageous in a case where a dried reinforcing fiber woven fabric is set.

Further, as shown in Figures 35 (A) and (B), in a case where a flange portion 343b of a rib 343 is disposed in a recessed portion 342a formed on a core material 342, a gap can be formed before molding between a tip surface 343c of the flange portion 343b of the rib 343 and an confronting surface 342b of the recessed portion 342a of the core material 342, and the gap portion can be interposed as a layer 344 made from only resin or a resin-rich layer, after molding. It is preferred that the width of the above-described gap or the layer 344 is 5% or less relative to the length a of the flange portion 343b. In the structure having such a layer 344, at the time of molding, the distribution and impregnation of a resin can be facilitate by the structure functioning as a resin path, and because the rib flange forming reinforcing fiber substrate is surely disposed within the recessed portion 342a and the end portion thereof can be surely prevented from being overlapped onto the surface of the core material, the flatness of the surface of the FRP plate 341 disposed thereon can be ensured. Further, even in a case where voids are easily generated, the voids can be collected in the resin-only layer or the resin-rich layer 344, and therefore, the void ratio of the FRP portion can be reduced, thereby ensuring a desired strength.

Thus, in the above-described FRP structural material and process for manufacturing the same, a lightweight, high-strength, high-stiffness and relatively large FRP structural material can be manufactured easily and inexpensively by integral molding.

Further, in the present invention, when an integral molding such as one shown in Figure 19 is performed, a core material having a pre-defined groove can be used.

Namely, a groove provided on a core material becomes a resin path at the time of molding, and this groove has been formed, so far, by post-processing due to machining after a body of a core material is formed. In this embodiment, a groove is formed substantially at the same time as the molding of the body of a core material. A groove is formed by foaming in a mold with a pattern for forming a designed groove, and an FRP structural material is molded so as to dispose an FRP layer on at least one surface of a core material formed from a foamed material on which a groove has been formed at least its one surface simultaneously with the molding. Also in such an FRP structural material, it is preferable that reinforcing fibers comprising the FRP layer include a tow-like carbon fiber filamentary yarn the number of filament of which is in the range of 10,000 to 300,000.

In a case where a core material is made from a lightweight resin, a desired groove pattern is previously formed in a mold for a core material, and a groove with the desired pattern is formed simultaneously with the molding of the core material by injecting a resin in the mold. Especially, in a case where a core material is made from a foamed material, a desired groove pattern is previously formed in a mold for a core material, a resin containing a foaming agent is injected into the mold, and by foaming the resin in the mold, a core material made from a foamed material having a groove with a desired pattern can be easily molded. Thus, a post-processing for forming a groove is not necessary, and the time and cost for manufacturing a core material with a groove can be remarkably decreased. This leads to remarkably decrease the time and cost also for manufacturing an FRP structural material as viewed from the whole process of manufacture of the FRP structural material. In particular, this process is advantageous for manufacture of a relatively large FRP structural material, or an FRP structural material with a large number of core materials to be used.

Further, because the groove is formed by molding together with the core material itself, substantially any kind of groove pattern can be formed freely and easily. Therefore, a pattern of a resin path required when molding an FRP structural material is easily optimized, and an FRP structural material with uniform and excellent properties not only as a part but also as the whole of the material can be obtained.

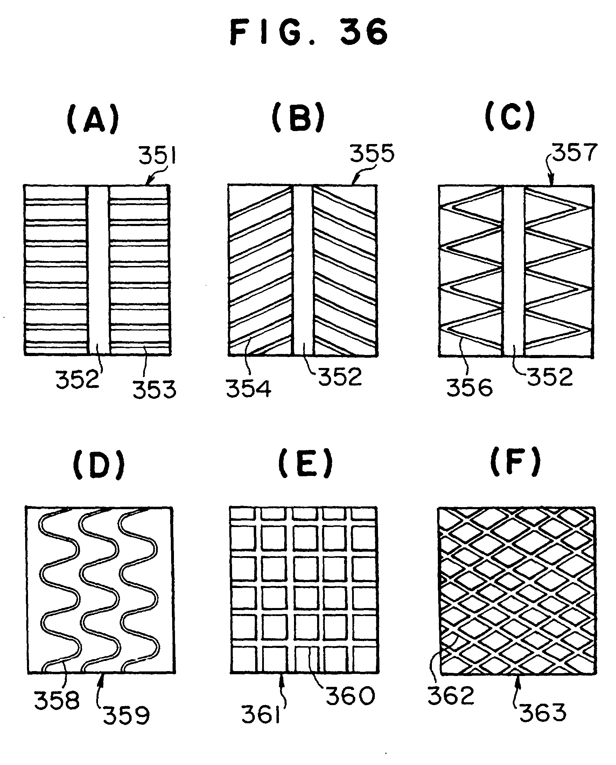

This optimization of groove pattern of a core material may be decided in accordance with an FRP structural material to be manufactured. Figure 36 shows various kinds of examples of groove pattern of a core material. Of course, an arbitrary groove pattern can be employed other than patterns shown in Figure 36.

Figure 36 (A) shows a core material 351 having a groove pattern similar to the aforementioned core material shown in Figure 2 and shows a pattern that a plurality of small grooves 353 are diverged from a large groove 352 in the directions perpendicular to the large groove at both sides thereof. Figure 36 (B) shows a core material 355 having a pattern that small grooves 354 are diverged obliquely from large groove 352 and the small grooves 354 extend in parallel to each other. Figure 36 (C) shows a core material 357 having a pattern that small grooves 356 each formed as a mountain-like shape communicate with the large groove 352 on both sides thereof. Figure 36 (D) shows a core material 359 having a pattern that a plurality of grooves 358 each formed so as to extend at a wave-like shape are formed. Figure 36 (E) shows a core material 361 having a pattern that a groove 360 is formed like a rectangular lattice. Figure 36 (F) shows a core material 363 having a pattern that a groove 362 is formed like a oblique lattice. As to the cross-sectional shape of a groove, a reversed trapezoid or V-shape is better than a rectangle such as one shown in Figure 23, in order to facilitate the removal of a mold after foaming in the mold.

Thus, by forming a groove of a core material by molding simultaneously with the molding of the core material, the groove can be formed in a substantially arbitrary pattern, and a resin flow pattern at the time of molding can be optimized in accordance with an FRP structural material to be manufactured. By the optimization of a resin flow pattern, an FRP structural material more uniform and more excellent in properties can be integrally molded. Further, because a groove of a core material is formed simultaneously with the molding of the core material itself, as viewed as the entire manufacture of an FRP structural material including the manufacture and the preparation of the core material, the FRP structural material can be integrally molded more efficiently and more inexpensively.

Furthermore, in the present invention, a net-like material can be used as a resin distribution medium when an FRP structural material is molded, and this net-like material can be molded integrally with a core material and a reinforcing fiber substrate. The net-like material comprises, for example, a sheet-like material the resin flow resistance of which in the surface direction is lower than that in the thickness direction, and in which a resin having a viscosity of 5 poise and a discharge pressure of 1 kg/cm$^2$ can flow in the surface direction at a speed of 1 cm/min. or more. Although the raw material is not particularly limited, a net-like material made from a resin is preferable because a net-like material is left at an integrally enclosed condition after molding. The net-like material is preferably formed at 50 meshes or more and 500 meshes or less. When molding, a net-like material is filled with an FRP matrix resin injected, and after molding, it is integrated with the matrix resin. Therefore, the smaller the amount of a resin filled in a net-like material is, the lighter a molded material is, and therefore, the thickness of this net-like material is preferably 3 mm or less. If a liquid resin at a room temperature is used as the matrix resin to be injected, the formation of the net-like material is not deformed at the time of the resin injection and the resin distribution.

In such an FRP structural material, although a structure wherein an FRP layer exists only on one surface of a core material, a structure wherein an exposed surface of a core material exists, a structure wherein the exposed core material surface is not FRP but is covered with a resin layer, and the like can be employed, from the viewpoint of strength and stiffness of a final product, a sandwich structure wherein FRP layers are disposed on both surfaces of a core material or a structure wherein an FRP layer is disposed over the entire circumference of a core material, is preferably employed.

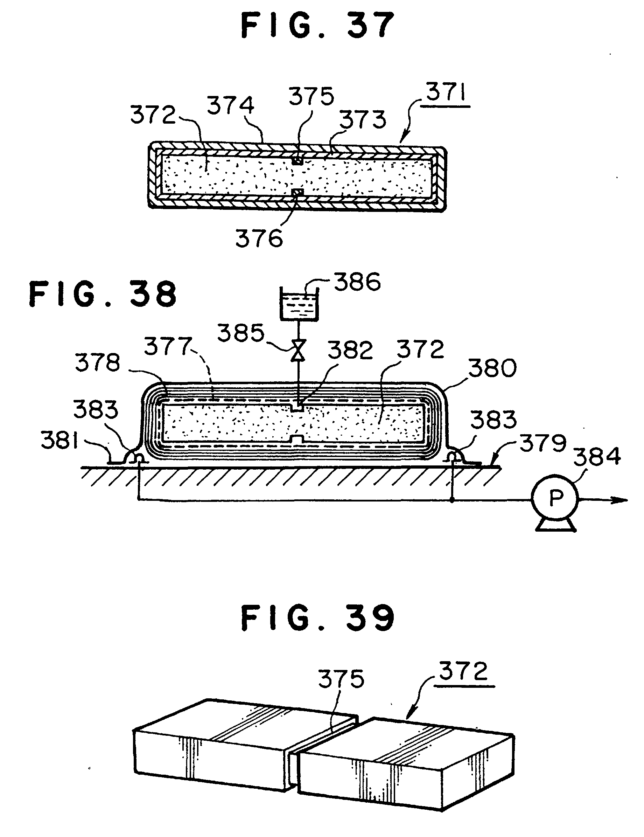

Figure 37 shows an example of such a structure. In an FRP structural material 371 shown in Figure 37, a resin layer 373 containing a net-like material is disposed over the entire circumference of a core material 372 formed from a foamed material, and an FRP layer 374 is formed on it over the entire circumference. A groove 375 is defined on the core material 372 for forming a resin path at the time of molding, and after molding, the inside of the groove 375 is formed as a layer 376 composed of mainly a resin only.

Figures 38 and 39 show an example of a process for molding such an FRP structural material 371. In Figure 38, a net-like material 377 of 300 meshes or less is disposed around core material 372, and a reinforcing fiber substrate 378 is disposed on the net-like material 377 over its entire circumference. These materials are disposed on a mold surface 379, and the whole is covered with a bag film 380. A seal tape 381 and the like seals between an end portion of the bag film 380 and the mold surface 379. Although the bag film 380 is disposed on the mold surface 379 in this embodiment, it is possible to enclose the whole with a bag film 380 without a mold. Further, it is also possible to dispose a rigid plate such as an iron plate between the bag film 380 and the reinforcing fiber substrate 378 and to ensure a flatness of a surface of a molded product by the molded surface or the rigid plate.

As shown in Figure 39, a groove 375 for forming a resin path at the time of molding is defined on a core material 372 at the central portion over its entire circumference. This groove 375 may be provided at a plurality of positions, or may extend in both of longitudinal and transverse directions.

As shown in Figure 38, a resin injection port 382 is provided at a position corresponding to the groove 375 of the core material 372, and a vacuum suction port 383 is provided on both end portions in the bag film 380. After the whole is covered with the bag film 380, the inside is evacuated at a vacuum condition by suction of a vacuum pump 384. Then, a valve 385 is opened and a resin 386 is injected through the injection port 382. A member separable together with the bag film 380 after molding may be provided on the portions of the injection port 382 and the suction port 383.

The injected resin is distributed along the groove 375 naturally and quickly in the inside of the evacuated portion covered with the bag film 380 as well as diffused over the entire inner surface of the reinforcing fiber substrate 378 via the net-like material 377. The distributed resin is impregnated in the thickness direction of the reinforcing fiber substrate 378. As the distance of this thickness direction is short, the resin is impregnated extremely quickly. The impregnated resin is cured at a room temperature or by heating as needed, thereby completing an FRP structural material 371 by integral molding. After curing the resin, the bag film 380 is removed, and the FRP structural material 371 is taken out. Where, a separable material (not shown) to be peeled after molding may be interposed between the reinforcing fiber substrate 378 and the bag film 380, as needed. In the above-described embodiment, the bag film 380 itself has a function of such a separable material.

The FRP structural material 371 thus molded has a lightweight, high-strength and high-stiffness properties, and can be manufactured extremely easily and inexpensively by the above-described vacuum RTM process, even in a case of a relatively large molded product. Further, because the injected resin is distributed through the net-like material 377, a quick and uniform distribution can be achieved, and the FRP layer of the molded FRP structural material 371 also can indicate desired and uniform properties.

The groove 375 formed on the core material 372 becomes a layer substantially composed of only resin, and the portion of the net-like material 377 is cured together with the injected resin. These portions become void escape portions for an FRP layer to be formed, and they can decrease a void ratio of the FRP layer, thereby ensuring the entire FRP structural material 371 at high-strength and high-stiffness conditions.

In such an FRP sandwich structural material, preferably the fiber volume content of an FRP plate is 35% or more and 65% or less, and the void ratio thereof is 5% or less, and more preferably, the fiber volume content 40% or more and 55% or less, and the void ratio is 3% or less. Such high fiber volume content and low void ratio can be easily achieved by a core material with a groove and the above-described integral molding.

In the above-described embodiment, the resin for FRP may be substituted for an inorganic material to make a composite material, and such a composite material can be used particularly as a fireproof material. As preferable inorganic materials, for example, a cement, a mortar, a concrete, an alkali silicate or a gypsum can be raised. Especially, a cement or a mortar is more preferable.

Further, as a core material, a hollow material can be used, and in this case, a foaming material can be filled in the inside. The raw material of a core material can be selected arbitrarily, and for example, it can be composed of a plastic or a rubber or a thin metal and the like. Furthermore, the cross sectional shape of a core material also can be selected arbitrarily, and for example, a cross section of a circle or a rectangle can be employed.

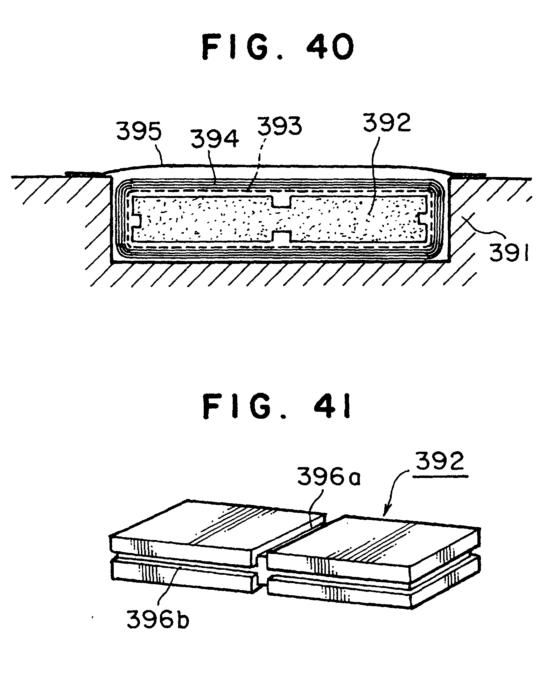

Figures 40 and 41 show a process for manufacturing an FRP sandwich structural material according to another embodiment. In the process shown in Figure 40, a core material 392, a net-like material 393 provided around the core material 392, and a reinforcing fiber substrate 394 provided around the net-like material 393, are disposed in a mold 391, and the whole of them is covered with a bag film 395 at the upper surface side of the mold 391. In this embodiment, as shown in Figure 41, on the core material 392, a groove 396a extending in the width direction over the entire circumference similarly to that shown in Figure 39, and a groove 396b communicating with the groove 396a and extending over the entire circumference of the side surfaces of the core material 392, are provided.

Thus, by replacing a function of small grooves 185, among a large groove 184 and small grooves 185 shown in Figure 20, with a function due to a net-like material 393, a recessed portion on the surface of a molded product due to "an escape of a resin", which is caused by shrinking due to curing of a resin left in the groove portion, can be greatly decreased. It is suitable for use in that a surface flatness is required.

After the inside of a bag film 395 is evacuated by the method similar to that shown in Figure 38, when a resin is injected from a position corresponding to a central groove 396a, the injected resin is distributed by both the groove 396a and the groove 396b, and is diffused quickly over the entire inner surface of the reinforcing fiber substrate 394 through the net-like material 393. The distributed resin is impregnated into the reinforcing fiber substrate 394, and by curing, an FRP sandwich structural material is molded.

The shape and the size of a core material can be set substantially freely, other than those shown in Figure 39 and Figure 41. Further, in a vacuum bag process using a bag film, because there is no restriction in shape, even in a case of an FRP sandwich structural material with a complicated shape, it can be integrally molded easily.

Thus, according to the above-described FRP sandwich structural material and the process for manufacturing the same, by integrally molding a net-like material provided as a resin distribution medium, a relatively large FRP structural material having lightweight, high-strength and high-stiffness properties can be manufactured remarkably easily ant inexpensively.

Further, the present invention provides a process for manufacturing an FRP structural material, wherein a resin non-impregnated portion can be repaired rationally.

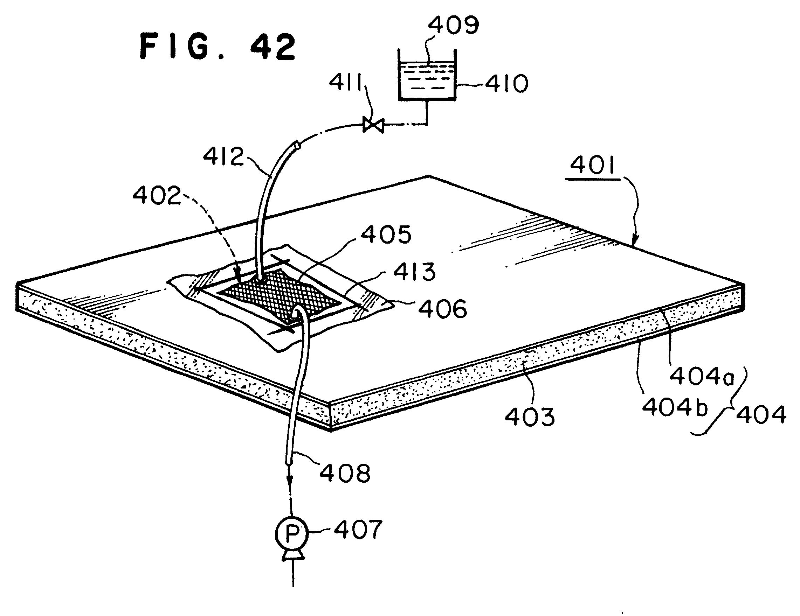

Figure 42 shows an embodiment of the above-described process for manufacturing an FRP structural material. In this embodiment, although a repair method is shown for a case that a resin non-impregnated portion 402 is generated at a part of a surface of an FRP structural material 401 formed as a relatively large flat panel, the size and the shape of the FRP structural material are not limited. In this embodiment, the FRP structural material 401 is molded as a sandwich structural material disposing FRP skin layers 404a and 404b on both surfaces of a core material 403 (for example, a core material formed from a independent foamed porous body). Figure 42 shows a case where resin non-impregnated portion 402 is generated on the surface of one FRP skin layer 404a.

As shown in Figure 42, first, a resin distribution medium 405 comprising, for example, a net-like material, is disposed on the surface of resin non-impregnated portion 402, and from the upper side thereof, the whole of the resin non-impregnated portion 402 is covered with a bag film 406 prepared as a bag substrate. To the bag film 406, a suction pipe 408 connected to a vacuum pump 407, and a resin supply pipe 412 connected via a valve 411 to a resin storage tank 410 containing a resin 409, are connected. The connecting position of the suction pipe 408 and the connecting position of the resin supply pipe 412 are set at positions opposite to each other relative to the resin non-impregnated portion 402.

A double coated adhesive tape 413 as a seal member is interposed between the bag film 406 and a surface of a portion including the resin non-impregnated portion 402 and its vicinity portion of the FRP structural material 401, thereby sealing the whole of the resin non-impregnated portion 402 from its circumference.

At this state, the vacuum pump is operated, and by the suction through the suction pipe 408, the inside covered with the bag film 406 is evacuated (at a condition of a reduced pressure). After such a state is completed, the valve 411 is opened and resin 409 is injected into the resin non-impregnated portion 402 via resin supply pipe 412. Because the inside is set at a vacuum condition, the injected resin is quickly distributed along the resin distribution medium 405, while the resin is impregnated into an exposed reinforcing fiber substrate of the resin non-impregnated portion 402. Since substantially the whole of the resin non-impregnated portion 402 is set at a predetermined vacuum condition, the injected resin is impregnated into the whole of the resin non-impregnated portion 402 efficiently and quickly, and therefore, a hole or a local non-impregnated part is not left.

Thereafter, the bag film 406 and the resin distribution medium 405 are removed, and the impregnated resin is cured. As to this resin distribution medium 405, in a case where a particular problem does not occur, it may be left in the FRP structural material 401 at a condition integral with the cured resin without removing. Further, in a case where the resin non-impregnated portion 402 is relatively narrow, use of the resin distribution medium 405 can be omitted.

In such an FRP structural material 401 thus repaired and manufactured, in the resin non-impregnated portion 402, an original reinforcing fiber substrate is utilized as it is, and because thereinto a resin is impregnated substantially completely and the resin is cured, the reinforcing fiber substrate is not cut. Further, because the repaired FRP portion is formed as an FRP portion having the substantially completely same FRP structure as that of the vicinity and there is no hole or no local non-impregnated portion left in the repaired portion, a desired FRP structural material 401 without partial decrease in strength can be efficiently obtained.

Furthermore, the working is extremely simple, because removal of the resin non-impregnated portion 402 and deposition of other materials are not necessary, and merely the operation may be performed substantially for covering the resin non-impregnated portion 402 with the bag substrate, evacuating the inside, and impregnating the resin. Further, the position of a resin non-impregnated portion to be repaired is not substantially restricted, and any surface portion of an FRP structural material can be served to the repair. Moreover, because the working is simple, the cost required for the repair, ultimately, the cost required for the whole of the manufacture of the FRP structural material, are extremely low.

Although the FRP structural material 401 having a sandwich structure is shown in Figure 42, of course, a structure of a single FRP plate may be available. Further, the structure of an FRP portion also is not particularly restricted.

Although the reinforcing fibers for an FRP material is not particularly limited, for example, it is preferred to use a unidirectional material, a woven fabric, a mat or a strand of a carbon fibers, or a unidirectional material, a woven fabric, a mat or a roving of glass fibers, at a single or mixture formation. Especially, it is preferred to use carbon fibers in order to achieve an effect of lightweight property as much as possible. As the resin for an FRP, a thermosetting resin such as an epoxy, an unsaturated polyester, a phenol or a vinyl ester is preferable from the viewpoints of molding property and cost. However, a thermoplastic resin such as a nylon or an ABS resin, or a resin mixed with a thermosetting resin and a thermoplastic resin can be also used. As to the material for a core, a foamed material and a wood can be used, and a foamed material is more preferable from the viewpoint of lightweight property.

According to such a process for manufacturing an FRP structural material capable of performing a rational repair, a resin non-impregnated portion can be repaired extremely simply and substantially perfectly, and an FRP structural material with lightweight and desired mechanical properties can be manufactured easily and inexpensively.

Industrial Application of the Invention

In the present invention, an FRP structural material with lightweight and high strength properties can be manufactured efficiently and inexpensively. The FRP structural material according to the present invention can be used for any field, and particularly, it can be applied suitable to a relatively large structural material which requires lightweight and high-strength properties, for example, to a structural material for vehicles, a structural material for relatively large machines or a building material for a roof or a wall and the like.

**Claims**

1.  An FRP structural material having a core material and an FRP skin layer disposed on at least one surface of said core material, **characterized in that** a plurality of core materials are stacked in the thickness direction.

2.  The FRP structural material according to claim 1, wherein said FRP structural material has a portion where core materials are directly stacked onto each other.

3.  The FRP structural material according to claim 1 or 2, wherein said FRP structural material has a portion where an FRP skin layer is interposed between stacked core materials.

4.  The FRP structural material according to any of claims 1 to 3, wherein a stacked body of said core materials has a curved surface on at least a part of the body.

5.  The FRP structural material according to any of claims 1 to 4, wherein a thickness of one core material is 20 mm or less.

6.  The FRP structural material according to any of claims 1 to 5, wherein said FRP structural material has an FRP rib which extends in the thickness direction of said core material and which is combined integrally with said FRP skin layer.

7. The FRP structural material according to any of claims 1 to 6, wherein said core material comprises a foamed material.

8. The FRP structural material according to any of claims 1 to 7, wherein a groove is formed for distribution of a resin when an FRP skin layer is formed on a surface of at least one sheet of said core material.

9. The FRP structural material according to claim 8, wherein a groove for resin distribution comprises a large groove and a small groove communicated with said large groove.

10. The FRP structural material according to any of claims 1 to 7, wherein a net-like material is disposed at a position adjacent to a reinforcing fiber substrate of an FRP skin layer, and said FRP skin layer, said net-like material and at least one sheet of a core material are integrally molded.

11. An FRP structural material wherein a pair of plates, at least one of which contains FRP, are disposed with a gap therebetween, and a rib structural material connecting both plates is interposed in the gap, **characterized in that** a seamless, enclosed hollow core material is contained in said gap.

12. The FRP structural material according to claim 11, wherein a dimension of said gap is varied in the extension direction of said plates.

13. The FRP structural material according to claim 12, wherein at least one plate is formed as a folded plate in which a mountain part and a valley part are disposed alternately.

14. The FRP structural material according to any of claims 11 to 13, wherein said seamless, enclosed hollow core material comprises a blow molded product made from a thermoplastic resin.

15. The FRP structural material according to any of claims 11 to 14, wherein a volume of said seamless, enclosed hollow core material is 1000 cm$^3$ or more.

16. The FRP structural material according to any of claims 11 to 15, wherein a matrix resin of FRP of at least one plate is a phenol resin.

17. The FRP structural material according to any of claims 11 to 16, wherein a groove is defined on at least one surface of said seamless, enclosed hollow core material.

18. The FRP structural material according to any of claims 11 to 16, wherein a net-like material is disposed at a position adjacent to a reinforcing fiber substrate of FRP of at least one plate, and said at least one plate, said net-like material and at least said seamless, enclosed hollow core material are integrally molded.

19. The FRP structural material according to any of claims 11 to 18, wherein a thickness of said seamless, enclosed hollow core material is in the range of 0.5 mm to 5 mm.

20. The FRP structural material according to any of claims 11 to 19, wherein carbon fibers are contained as reinforcing fibers of FRP of at least one plate.

21. The FRP structural material according to claim 20, wherein said reinforcing fibers include a tow-like carbon fiber filamentary yarn of which filament number is in the range of 10,000 to 300,000.

22. The FRP structural material according to any of claims 11 to 21, wherein a fireproof material is provided on at least one surface.

23. An FRP structural material comprising a core material, an FRP plate disposed on at least one surface of said core material and an FRP reinforcing material disposed at least on one end portion of said core material and having a flange portion extending substantially in parallel to and a web portion extending substantially perpendicular to said FRP plate,

**characterized in that** a recessed portion, into which said flange portion of said reinforcing material is fitted, is defined on at least one surface of said one end portion of said core material, a groove communicating with said recessed portion and forming a resin path at the time of molding is defined on said core material, and said FRP plate, said FRP reinforcing material and said core material are integrally molded with a resin.

24. The FRP structural material according to claim 23, wherein said FRP structural material has a sandwich structure in which said FRP plate is disposed on each surface of said core material, and said reinforcing material extends between two FRP plates.

25. The FRP structural material according to claim 23 or 24, wherein said recessed portion is defined on each surface of said core material.

26. The FRP structural material according to any of claims 23 to 25, wherein said groove comprises a large groove and a small groove diverged from said large groove.

27. The FRP structural material according to claim 26, wherein the following relationship is satisfied.

$$\text{(a) } 200 \geqq W \times H \geqq 5 \text{ (mm}^2\text{), (b) } 300 \geqq P \geqq 100 \text{ (mm)}$$

Where, H is a depth of said large groove, W is a groove width and P is a pitch of the groove.

28. The FRP structural material according to claim 26, wherein the following relationship is satisfied.

$$\text{(a) } 100 \geqq w \times h \geqq 1 \text{ (mm}^2\text{),}$$

$$\text{(b) } 100 \geqq p \geqq 5 \text{ (mm)}$$

Where, h is a depth of said small groove, w is a groove width and p is a pitch of the groove.

29. The FRP structural material according to any of claims 23 to 28, wherein said reinforcing material is disposed discontinuously in a surface direction of said FRP plate.

30. The FRP structural material according to any of claims 23 to 29, wherein a share strength between said flange portion of said reinforcing material and said FRP plate is not less than a tensile strength of said flange portion of said reinforcing material itself determined in the share direction thereof.

31. The FRP structural material according to any of claims 23 to 29, wherein a length of said flange portion of said reinforcing material "a" satisfies the following equation.

$$\max (\sigma_2 \times t_2, \sigma s \times ts) \geqq K \tau a$$

$$\geqq \min (\sigma_2 \times t_2, \sigma s \times ts)$$

Where,

$\sigma_2$ is a tensile strength of the flange portion,
$t_2$ is a thickness of the flange portion,
$\sigma s$ is a tensile strength of the FRP plate,
ts is a thickness of the FRP plate,
$\tau$ is a share strength between the flange portion and the FRP plate,
K is a valid efficiency of connection,
"max" shows the greatest value in the parenthesis, and
"min" shows the smallest value in the parenthesis.

**32.** The FRP structural material according to claim 31, wherein a value of the product by the tensile strength $\sigma_2$ and the thickness $t_2$ of said flange portion of said reinforcing material is not more than a value of the product by the tensile strength $\sigma$ s and the thickness ts of said FRP plate, and the length "a" of said flange portion satisfies the following equation.

$$\sigma\, s \times ts\, /\, \tau \geqq K\, a \geqq \sigma_2 \times t_2\, /\, \tau$$

**33.** The FRP structural material according to any of claims 23 to 29, wherein a length of said flange portion "a" and a length of said web portion "b" of said reinforcing material satisfy the following equation.

$$a\, /\, a_0 = K\, (b\, /\, b_0)\, [(t_2\, /\, t_{20})\, /\, (t_1\, /\, t_{10})]^2$$

Where,

    $t_1$ is a thickness of the web portion,
    $t_2$ is a thickness of the flange portion,
    the attached character 0 is a standard value set up depending on a molding condition, and
    K is a proportional constant.

**34.** The FRP structural material according to any of claims 23 to 29, wherein a length of said flange portion "a" and a length of said web portion "b" of said reinforcing material satisfy the following equation.

$$a\, /\, a_0 = K\, (b\, /\, b_0)\, (ts\, /\, t_1 + 1)^2$$

Where,

    $t_1$ is a thickness of the web portion or the flange portion,
    ts is a thickness of the FRP plate,
    $a_0$ and $b_0$ are standard values set up depending on a molding condition, and
    K is a proportional constant.

**35.** An FRP structural material **characterized in that** an FRP layer is disposed on at least one surface of a core material comprising from a foaming material, said core material being molded by foaming in a mold with a pattern for defining a predetermined groove and said core material having a groove defined at the same time as molding on at least one surface of said core material.

**36.** The FRP structural material according to claim 35, wherein reinforcing fibers of said FRP layer include a tow-like carbon fiber filamentary yarn of which filament number is in the range from 10,000 to 300,000.

**37.** A structural material **characterized in that** a core material, a net-like material disposed on a surface of said core material, and a layer containing a reinforcing fiber substrate disposed on said net-like material are disposed in this order, and these materials are molded integrally.

**38.** The structural material according to claim 37, wherein said layer containing said reinforcing fiber substrate comprises an FRP layer.

**39.** The structural material according to claim 37, wherein said layer containing said reinforcing fiber substrate comprises a fiber reinforcing inorganic material layer.

**40.** The structural material according to any of claims 37 to 39, wherein a thickness of said net-like material is 3 mm or less.

**41.** The structural material according to any of claims 37 to 40, wherein a groove is defined on said core material for forming a resin path at the time of molding.

**42.** The structural material according to any of claims 37 to 41, wherein reinforcing fibers of said reinforcing fiber substrate include a tow-like carbon fiber filamentary yarn of which filament number is in the range of 10,000 to 300,000.

**43.** The structural material according to any of claims 37 to 42, wherein said core material is formed as a hollow material.

**44.** The structural material according to claim 43, wherein said core material is formed from a plastic, a rubber or a thin metal.

**45.** The structural material according to claim 43 or 44, wherein said core material has a circular or rectangular cross section.

**46.** The structural material according to any of claims 43 to 45, wherein a foaming material is filled up in said core material.

**47.** A process for manufacturing an FRP structural material **characterized in that** a plurality of core materials are stacked, a reinforcing fiber substrate is disposed on at least one surface of said core material, and said reinforcing fiber substrate is impregnated with a resin.

**48.** The process for manufacturing an FRP structural material according to claim 47, wherein a reinforcing fiber substrate is interposed into at least a part of a portion between stacked core materials.

**49.** The process for manufacturing an FRP structural material according to claim 47 or 48, wherein a groove is defined on a surface of a core material in contact with a reinforcing fiber substrate, and a resin is distributed along said groove as well as the resin is impregnated into the reinforcing fiber substrate.

**50.** The process for manufacturing an FRP structural material according to claim 47 or 48, wherein a net-like material is disposed between a core material and a reinforcing fiber substrate, and a resin is distributed along said net-like material as well as the resin is impregnated into the reinforcing fiber substrate.

**51.** The process for manufacturing an FRP structural material according to any of claims 47 to 50, wherein, after at least a portion disposed with a reinforcing fiber substrate is covered with a bag substrate, the inside covered with said bag substrate is evacuated, and a resin is injected to impregnate the resin into the reinforcing fiber substrate.

**52.** The process for manufacturing an FRP structural material according to any of claims 47 to 51, wherein a reinforcing fiber substrate extending in the thickness direction of the core material is disposed, and an FRP rib is formed by impregnating a resin into said reinforcing fiber substrate.

**53.** A process for manufacturing an FRP structural material **characterized in that** reinforcing fibers are disposed on a mold, a seamless, enclosed hollow core material wound with reinforcing fibers at a predetermined position is disposed on said reinforcing fibers disposed on said mold, reinforcing fibers are further disposed thereon, and after the whole of the materials is covered with a film substrate for vacuum, the inside covered with said film substrate is evacuated, and a resin is injected to impregnate the resin into reinforcing fibers.

**54.** The process for manufacturing an FRP structural material according to claim 53, wherein said seamless, enclosed hollow core material is formed by blow molding.

**55.** A process for manufacturing an FRP structural material formed from an FRP composed of a reinforcing fiber substrate and a matrix resin, **characterized in that**, when a portion not impregnated with a resin is found on a surface, after the whole of the resin non-impregnated portion and its vicinity is entirely covered with a bag substrate, the inside covered with said bag substrate is evacuated, and a resin is injected into the inside to impregnate the resin into the resin non-impregnated portion of said reinforcing fiber substrate.

**56.** The process for manufacturing an FRP structural material according to claim 55, wherein the whole of said resin non-impregnated portion is covered with said bag substrate after a resin distribution medium is disposed on said resin non-impregnated portion.

**57.** The process for manufacturing an FRP structural material according to claim 56, wherein a resin permeable mold separation material is interposed between said resin distribution medium and said reinforcing fiber substrate with said resin non-impregnated portion.

58. A process for manufacturing an FRP structural material, **characterized in that** a core material having a recessed portion defined on at least one surface of one end portion, a reinforcing fiber substrate extending in the surface direction of the core material on at least one surface of said core material, and a substrate for forming a reinforcing material having a flange portion substantially extending in parallel to said reinforcing fiber substrate and positioned in said recessed portion and a web portion substantially extending perpendicular to said reinforcing fiber substrate, are disposed in a mold, a medium for distributing a resin in its surface direction is disposed above, or above and below these disposed materials and substrate, or a resin distribution path for distributing a resin in the surface direction of said core material is defined on said core material, and then, after the whole is covered with a bag film, the inside covered with the bag film is evacuated, a resin is injected and distributed along the surface of said reinforcing fiber substrate and the resin is impregnated into said reinforcing fiber substrate, thereby said reinforcing fiber substrate, said substrate for forming a reinforcing material and said core material are integrally molded by the resin.

59. The process for manufacturing an FRP structural material according to claim 58, wherein said substrate for forming a reinforcing material also comprises a reinforcing fiber substrate.

60. The process for manufacturing an FRP structural material according to claim 58, wherein said substrate for forming a reinforcing material comprises a preformed FRP substrate.

61. The process for manufacturing an FRP structural material according to any of claims 58 to 60, wherein a reinforcing fiber substrate is disposed on each surface of said core material, and a substrate for forming a reinforcing material is disposed so as to extend between both reinforcing fiber substrates.

62. The process for manufacturing an FRP structural material according to any of claims 58 to 61, wherein a resin distribution path of said core material is communicated with said recessed portion, and said substrate for forming a reinforcing material is integrally molded by introducing said injected resin into the recessed portion.

63. A process for manufacturing an FRP structural material, **characterized in that** a core material with a groove is molded by foaming a foaming material in a mold with a pattern for forming a predetermined groove, a reinforcing fiber substrate is disposed on at least one surface of the molded core material with a groove, and after the whole is covered with a bag substrate, the inside covered with said bag substrate is evacuated, and a resin is injected and distributed along the surface of said reinforcing fiber substrate via said groove of said core material while the resin is impregnated into said reinforcing fiber substrate in the thickness direction of said reinforcing fiber substrate, thereby said core material and said reinforcing fiber substrate are integrally molded by the resin.

64. A process for manufacturing an FRP structural material, **characterized in that** a core material, a net-like material disposed on at least one surface of said core material, and a reinforcing fiber substrate provided on said net-like material are disposed in this order, and after the whole is covered with a bag film, the inside covered with the bag film is evacuated, and a resin is injected and distributed along the surface of said reinforcing fiber substrate via said net-like material, the distributed resin is impregnated into said reinforcing fiber substrate, thereby said core material, said net-like material and said reinforcing fiber substrate are integrally molded by the resin.

65. The process for manufacturing an FRP structural material according to claim 64, wherein a groove for a resin path is defined on said core material, and an injected resin through said groove is distributed to each part of said net-like material.

66. The process for manufacturing an FRP structural material according to claim 64 or 65, wherein a hollow core material is used as said core material.

67. The process for manufacturing an FRP structural material according to any of claims 64 to 66, wherein said reinforcing fiber substrate is disposed over the entire circumference of said core material.

# FIG. 1

# FIG. 2

# F I G. 3

21

24

23

24

22

22

# F I G. 4

31

34

32a

33

32b

32c

34

35

35

35

35

35

# F I G. 5

42

42

41

# FIG. 6

# FIG. 7

# FIG. 8

EP 1 162 058 A1

FIG. 9

FIG. 10

FIG. 11

31

FIG. 12

112    111

FIG. 13

121    123    122a

124    122b

FIG. 14

135    134    132a    131

133

132b

FIG. 15

141    142

# FIG. 16

151

152

153

154          154

# FIG. 17

163a 164a 161 162a

164b 162 163b

# FIG. 18

## (A)

171

## (B)

172a

173 172b

## (C)

174

175

# FIG. 19

192

191

188 187 189 194

193 182 183 190

181

# FIG. 20

182

185    186

186

184

# FIG. 21

## (A)

202

202    203

201

## (B)

212

212    213

211

## (C)

224    222

221    223

# FIG. 22

## (A)

202  203
231
201

## (B)

212  213
232
211

# FIG. 23

(P)

(H)

(W)

FIG. 24

242    244b    241

243    245a    244    245b    243
244a

FIG. 25

(A)    254b    251
252a
253
252b    254a    253
254

(B)    252a    255
256    256
252b    257

(C)    260b    252a    258
259    259
242b    260a    260
260b

FIG. 26

256a
256
257

# FIG. 27

# FIG. 28

# FIG. 29

# FIG. 30

FIG. 31

FIG. 32

(A)

(B)

FIG. 33

FIG. 34

FIG. 35

(A)

(B)

# F I G. 36

(A)    351    352    353

(B)    355    354    352

(C)    357    356    352

(D)    358    359

(E)    361    360

(F)    362    363

# FIG. 37

372  374  375  373  371

376

# FIG. 38

386

385  382  372  380

377
378
383
381  383
379  384

P

# FIG. 39

375  372

# FIG. 40

# FIG. 41

FIG. 42

## INTERNATIONAL SEARCH REPORT

| International application No. |
| --- |
| PCT/JP00/00838 |

A. CLASSIFICATION OF SUBJECT MATTER
    Int.Cl$^7$  B32B5/28, B29C70/44, B29C70/48

According to International Patent Classification (IPC) or to both national classification and IPC

B. FIELDS SEARCHED

Minimum documentation searched (classification system followed by classification symbols)
    Int.Cl$^7$  B32B1/00-35/00, B29C39/00-39/44, B29C70-00-70/88

Documentation searched other than minimum documentation to the extent that such documents are included in the fields searched
    Jitsuyo Shinan Koho        1926-2000
    Kokai Jitsuyo Shinan Koho   1971-1995

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP, 7-108529, A (Honda Motor Co., Ltd.), 25 April, 1995 (25.04.95)  (Family: none) | 1-10,47-52 |
| X | JP, 5-185539, A (Honda Motor Co., Ltd.), 27 July, 1993 (27.07.93) & US, 5418035, A  & US, 5464493, A | 1-10,47-52 |
| X | US, 4849147, A (The Budd Company), 04 May, 1998 (04.05.98) & EP, 212140, A    & JP,62-071617,A | 11-22,53,54 |
| X | JP, 4-179515, A (Nitto Boseki Co., Ltd.), 26.July.1992(26.06.1992) (Family: none) | 11-22,53,54 |
| X | JP, 4-246510, A (ISUZU MOTORS LIMITED), 02 September, 1992 (02.09.92)  (Family: none) | 11-22,53,54 |
| EX | JP, 2000-79649, A (Toray Industries, Inc.), 21 March, 2000 (21.03.00)  (Family: none) | 11-22,37-46, 53,54,64-67 |
| PX | JP, 11-254566, A (Toray Industries, Inc.), 21 September, 1999 (21.09.99)  (Family: none) | 23-36,58-63 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 10 May, 2000 (10.05.00) | 23.05.00 |

| Name and mailing address of the ISA/ | Authorized officer |
| --- | --- |
| Japanese Patent Office | |
| Facsimile No. | Telephone No. |

Form PCT/ISA/210 (second sheet) (July 1992)

**EP 1 162 058 A1**

## INTERNATIONAL SEARCH REPORT

| International application No. |
| --- |
| PCT/JP00/00838 |

C (Continuation). DOCUMENTS CONSIDERED TO BE RELEVANT

| Category* | Citation of document, with indication, where appropriate, of the relevant passages | Relevant to claim No. |
| --- | --- | --- |
| X | JP, 5-35235, U (ISUZU MOTORS LIMITED), 14 May, 1993 (14.05.93)  (Family: none) | 35,36,63 |
| X | US, 5721034, A (Scrimp Systems, L.L.C.), 24 February, 1998 (24.02.98) | 35,36,63 |
| X | JP, 54-100478, A (Toray Industries, Inc.), 08 August, 1979 (08.08.79)  (Family: none) | 37-46 |
| EX | JP2000-43172,A(Toray Industries, Inc.) 15.February.2000(15.02.00) (Family: none) | 37-42,64-65,67 |
| A | WO, 98-53982, A (Societe De Protection Des Inventions), 03 December, 1998 (03.12.98) | 55-57 |

Form PCT/ISA/210 (continuation of second sheet) (July 1992)

## INTERNATIONAL SEARCH REPORT

International application No.

PCT/JP00/00838

**Box I    Observations where certain claims were found unsearchable (Continuation of item 1 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box II    Observations where unity of invention is lacking (Continuation of item 2 of first sheet)**

This International Searching Authority found multiple inventions in this international application, as follows:

Each of the inventions in each of independent claims 1, 11, 23 and 35 is common to each other only in that each invention relates to an FRP structure body having a core layer; and, in consideration of the fact that an FRP structure body having a core layer is known, the main descriptions of respective inventions are not considered to be identical with each other. In addition, the invention in claim 37 does not even specify an FRP and is only common to each of the above inventions in that they relate to a structure body having a core layer; therefore, it is not identical with the above inventions in main description.

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐ The additional search fees were accompanied by the applicant's protest.
☐ No protest accompanied the payment of additional search fees.

Form PCT/ISA/210 (continuation of first sheet (1)) (July 1992)